# EUROPEAN PATENT APPLICATION

(11) **EP 4 598 148 A1**
(43) Date of publication of application: **06.08.2025**
(21) Application number: 23917179.6
(22) Date of filing: 14.11.2023
(51) Int. Cl.: H04W 52/02

(54) **NETWORK CHANNEL CONTROL METHOD AND ELECTRONIC DEVICE**

(30) Priority: 18.01.2023 CN 202310097496
(71) Applicant: Honor Device Co., Ltd., Shenzhen, Guangdong 518040 (CN)
(72) Inventor: WANG, Yuchen, Shenzhen, Guangdong 518040 (CN); SUN, Li, Shenzhen, Guangdong 518040 (CN)
(74) Representative: Isarpatent
(86) International application number: PCT/CN2023/131619
(87) International publication number: WO 2024/152711

(57) **Abstract**

Embodiments of this application provide a network channel control method and an electronic device, which are applied to the field of communication technologies. The method includes: obtaining a temperature of the electronic device and an output current of a battery; and in a running process of a target application, when the temperature is greater than a first temperature threshold and/or the output current is greater than a first current threshold, and there are M available network channels in a plurality of network channels, transmitting a data stream of the target application by using N of the M available network channels, where the available network channel is a network channel on which data transmission is being performed and that is in an available state for the target application, M is an integer greater than 1, and N is a positive integer less than M. In this way, when the temperature of the electronic device is greater than the first temperature threshold and/or the output current of the battery is greater than the first current threshold, and there are the M available network channels in the plurality of network channels, a part of the M available network channels is used to transmit the data stream, thereby reducing power consumption of the electronic device.

## Description

This application claims priority to Chinese Patent Application No. 202310097496.8, filed with the China National Intellectual Property Administration on January 18, 2023 and entitled "NETWORK CHANNEL CONTROL METHOD AND ELECTRONIC DEVICE", which is incorporated herein by reference in its entirety.

### TECHNICAL FIELD

This application relates to the field of communication technologies, and in particular, to a network channel control method and an electronic device.

### BACKGROUND

With continuous development of electronic technologies, electronic devices such as a mobile phone and a tablet computer have become common tools in people's life and work. To ensure that some services in the electronic device can be normally performed, the electronic device may perform data transmission by using a network channel.

When the electronic device performs the data transmission by using the network channel, how to reduce power consumption is a problem that needs to be resolved.

### SUMMARY

Embodiments of this application provide a network channel control method and an electronic device, which may transmit a data stream by using a part of M available network channels, thereby reducing power consumption of the electronic device.

According to a first aspect, an embodiment of this application provides a network channel control method, applied to an electronic device. The electronic device has a plurality of network channels, and a target application runs on the electronic device. The method includes: The electronic device obtains a temperature of the electronic device and an output current of a battery in the electronic device; and in a running process of the target application, when the temperature is greater than a first temperature threshold and/or the output current is greater than a first current threshold, and there are M available network channels in the plurality of network channels, the electronic device transmits a data stream of the target application by using target network channels in the M available network channels, where the available network channel is a network channel on which data transmission is being performed and that is in an available state for the target application, the target network channels are N of the M available network channels, M is an integer greater than 1, N is an integer greater than or equal to 1, and N is less than M.

In this way, when the temperature of the electronic device is greater than the first temperature threshold and/or the output current of the battery is greater than the first current threshold, and there are the M available network channels in the plurality of network channels, a network channel on/off decision can be triggered, the N available network channels are extracted from the M available network channels as the target network channels, to transmit the data stream of the target application, and another available network channel in the M available network channels other than the target network channels no longer transmits the data stream of the target application, thereby reducing power consumption of the electronic device.

In a possible implementation, before the electronic device transmits a data stream of the target application by using target network channels in the M available network channels, the method further includes: The electronic device obtains network quality information corresponding to the M available network channels, where the network quality information is used to represent network quality of the available network channel; and when a difference between network quality of at least two of the M available network channels is greater than a network quality threshold, network quality of the target network channel is higher than network quality of the another available network channel in the M available network channels other than the target network channel; or when a difference between network quality of any two of the M available network channels is less than or equal to the network quality threshold, a priority of the target network channel is higher than a priority of the another available network channel in the M available network channels other than the target network channel. In this way, an available network channel with relatively good network quality or an available network channel with a relatively high priority can be used for data transmission. This reduces power consumption of the electronic device while ensuring that network performance in the running process of the target application does not excessively degrade.

In a possible implementation, the method further includes: The electronic device obtains a target network delay and a composition frame rate of an image; and the electronic device selects the corresponding first temperature threshold and the corresponding first current threshold based on the target network delay and the composition frame rate, where when the target network delay is less than a delay threshold and the composition frame rate is greater than a frame rate threshold, the first temperature threshold is a first temperature value, and the first current threshold is a first current value; or when the target network delay is greater than or equal to the delay threshold, and/or the composition frame rate is less than or equal to the frame rate threshold, the first temperature threshold is a second temperature value, and the first current threshold is a second current value; and the first temperature value is less than the second temperature value, and the first current value is less than the second current value. In this way, when the target network delay is less than the delay threshold and the composition frame rate is greater than the frame rate threshold, it indicates that current network performance is relatively good. Therefore, a problem of high power consumption and heat generation of the electronic device can be processed in advance, to further reduce power consumption of the electronic device. However, when the target network delay is greater than or equal to the delay threshold and/or the composition frame rate is less than or equal to the frame rate threshold, it indicates that current network performance is relatively poor. Therefore, an issue of network performance can be preferentially considered, to further improve network performance in the running process of the target application.

In a possible implementation, after the electronic device transmits a data stream of the target application by using target network channels in the M available network channels, the method further includes: The electronic device obtains a temperature of the electronic device and an output current of the battery in the electronic device again; and when the temperature obtained again and the output current obtained again meet a first preset condition, the electronic device re-determines target network channels used to transmit the data stream.

In a possible implementation, the first preset condition includes: The temperature obtained again is less than a second temperature threshold, and/or the output current obtained again is less than a second current threshold; and the second temperature threshold is less than the first temperature threshold, and the second current threshold is less than the first current threshold; and that the electronic device re-determines target network channels used to transmit the data stream includes: The electronic device transmits the data stream by using the target network channel and another part or all of the M available network channels other than the target network channel. In this way, after the target network channels are used to transmit the data stream, if the temperature of the electronic device drops to less than the second temperature threshold and/or the output current of the battery drops to less than the second current threshold, the electronic device can restore a part or all of disabled available network channels in the M available network channels, to transmit the data stream by using the target network channel and the restored available network channel, thereby improving network performance in the running process of the target application.

In a possible implementation, N is an integer greater than 1, and the first preset condition includes: The temperature obtained again is greater than a third temperature threshold, and/or the output current obtained again is greater than a third current threshold; and the third temperature threshold is greater than the first temperature threshold, and the third current threshold is greater than the first current threshold; and that the electronic device re-determines target network channels used to transmit the data stream includes: The electronic device transmits the data stream by using a part of the target network channels, where network quality of a target network channel used to transmit the data stream is higher than network quality of a target network channel not used to transmit the data stream; or a priority of a target network channel used to transmit the data stream is higher than a priority of a target network channel not used to transmit the data stream. In this way, after the target network channels are used to transmit the data stream, if the temperature of the electronic device continues to rise to greater than the third temperature threshold and/or the output current of the battery continues to rise to greater than the third current threshold, the electronic device can continue to transmit the data stream of the target application by using the part of the target network channels, and another part of the target network channels no longer transmits the data stream of the target application, thereby further reducing power consumption of the electronic device.

In a possible implementation, after the electronic device transmits a data stream of the target application by using target network channels in the M available network channels, the method further includes: The electronic device obtains a target network delay and a composition frame rate of an image again; and when the target network delay obtained again meets a second preset condition relative to a target network delay obtained before a target network channel decision is made, and/or the composition frame rate obtained again meets a third preset condition relative to a composition frame rate obtained before the target network channel decision is made, the electronic device transmits the data stream by using the target network channel and another part or all of the M available network channels other than the target network channel.

In a possible implementation, the second preset condition includes: A difference between the target network delay obtained again and the target network delay obtained before the target network channel decision is made is greater than a product of a first preset percentage and the target network delay obtained before the target network channel decision is made; and the first preset percentage is greater than 0 and less than 1; and the third preset condition includes: A difference between the composition frame rate obtained before the target network channel decision is made and the composition frame rate obtained again is greater than a product of a second preset percentage and the composition frame rate obtained before the target network channel decision is made; and the second preset percentage is greater than 0 and less than 1. In this way, after the target network channels are used to transmit the data stream, if the target network delay increases, and an increased target network delay meets the second preset condition, and/or if the composition frame rate decreases, and a decreased composition frame rate meets the third preset condition, the electronic device can restore a part or all of disabled available network channels in the M available network channels, to transmit the data stream of the target application by using the target network channel and the restored available network channel, thereby improving network performance in the running process of the target application.

In a possible implementation, the electronic device includes a temperature sensor, a temperature sensor driver, a coulometer, a coulometer driver, and a network channel decision-making module; and that the electronic device obtains a temperature of the electronic device and an output current of a battery in the electronic device includes: The temperature sensor driver obtains an actual temperature of a target component collected by the temperature sensor; the temperature sensor driver determines the temperature of the electronic device based on the actual temperature; the temperature sensor driver sends the temperature of the electronic device to the network channel decision-making module; the coulometer driver obtains the output current of the battery collected by the coulometer; and the coulometer driver sends the output current to the network channel decision-making module. In this way, the network channel decision-making module is enabled to obtain the temperature of the electronic device by using the temperature sensor and the temperature sensor driver, and the network channel decision-making module is enabled to obtain the output current of the battery by using the coulometer and the coulometer driver.

In a possible implementation, the electronic device includes a connectivity service, a network channel control module, and a network channel decision-making module; and that the electronic device obtains network quality information corresponding to the M available network channels includes: The connectivity service sends network status information of each network channel and identification information of a network channel on which data transmission is being performed to the network channel control module, where the network status information includes an enabling status of the network channel and network quality information obtained when the enabling status is an available state, and the enabling status includes the available state or an unavailable state; the network channel control module sends the network status information of each network channel and the identification information of the network channel on which data transmission is being performed to the network channel decision-making module; the network channel decision-making module determines, from the plurality of network channels based on the enabling status of each network channel and the identification information of the network channel on which data transmission is being performed, an available network channel on which data transmission is being performed and whose enabling status is the available state; and the network channel decision-making module extracts, from the network status information of each network channel, network quality information corresponding to the available network channel.

In a possible implementation, the plurality of network channels include a cellular channel and a wireless fidelity (wireless fidelity, WiFi) channel, and the electronic device further includes a phone manager, a WiFi manager, a cellular network driver, a WiFi network driver, a mobile communication module, and a wireless communication module; and before the connectivity service sends network status information of each network channel to the network channel control module, the method further includes: The cellular network driver obtains network status information of the cellular channel from the mobile communication module; the cellular network driver sends the network status information of the cellular channel to the connectivity service by using the phone manager; the WiFi network driver obtains network status information of the WiFi channel from the wireless communication module; and the WiFi network driver sends the network status information of the WiFi channel to the connectivity service by using the WiFi manager.

In a possible implementation, that the electronic device transmits a data stream of the target application by using target network channels in the M available network channels includes: The network channel decision-making module selects the N available network channels from the M available network channels as the target network channels based on the network quality information corresponding to the M available network channels; the network channel decision-making module sends a network on/off decision result to the network channel control module, where the network on/off decision result is used to indicate to transmit the data stream by using the target network channel instead of transmitting the data stream by using the another available network channel in the M available network channels other than the target network channel; the network channel control module sends the network on/off decision result to the connectivity service; and the connectivity service controls, based on the network on/off decision result, the target network channels in the M available network channels to transmit the data stream. In this way, the network channel decision-making module can make the network channel on/off decision, so that the connectivity service can control the target network channel to transmit the data stream, and the another available network channel in the M available network channels other than the target network channel not to transmit the data stream, thereby reducing power consumption of the electronic device.

In a possible implementation, the electronic device further includes a phone manager, a WiFi manager, a cellular network driver, a WiFi network driver, a mobile communication module, and a wireless communication module; and that the connectivity service controls, based on the network on/off decision result, the target network channels in the M available network channels to transmit the data stream includes: When the another available network channel in the M available network channels other than the target network channel includes a cellular channel, the connectivity service sends a first control instruction to the cellular network driver by using the phone manager; and the cellular network driver controls, according to the first control instruction, the mobile communication module not to transmit the data stream; and/or when the another available network channel in the M available network channels other than the target network channel includes a WiFi channel, the connectivity service sends a second control instruction to the WiFi network driver by using the WiFi manager; and the WiFi network driver controls, according to the second control instruction, the wireless communication module not to transmit the data stream.

In a possible implementation, the electronic device includes an application information receiving module, a graphics library, a graphics interface hook module, an image composer, a frame rate detection module, and a network channel decision-making module; and that the electronic device obtains a target network delay and a composition frame rate of an image includes: The target application sends a first network delay to the application information receiving module; the application information receiving module sends the first network delay to the network channel decision-making module; when the target application invokes the graphics library to draw and render an image, the graphics interface hook module obtains a drawing and rendering instruction from the graphics library; the graphics interface hook module determines a second network delay according to the drawing and rendering instruction; the graphics interface hook module sends the second network delay to the network channel decision-making module; the network channel decision-making module determines the target network delay based on the first network delay and/or the second network delay; when the image composer composes a drawn and rendered image, the frame rate detection module obtains composition time at which each frame of image is composed; the frame rate detection module calculates the composition frame rate based on the composition time at which each frame of image is composed; and the frame rate detection module sends the composition frame rate to the network channel decision-making module. In this way, the first network delay can be obtained by using the application information receiving module, the second network delay can be obtained by using the graphics library and the graphics interface hook module, and the composition frame rate can be obtained by using the image composer and the frame rate detection module, so that a proper first temperature threshold and a proper first current threshold are selected based on the first network delay, the second network delay, and the composition frame rate in a phase of making the network channel on/off decision, and the target network channel used to transmit the data stream is adjusted again based on the first network delay, the second network delay, and the composition frame rate in a feedback phase after the network channel is turned on/off.

In a possible implementation, that the electronic device selects the corresponding first temperature threshold and the corresponding first current threshold based on the target network delay and the composition frame rate includes: The network channel decision-making module selects the corresponding first temperature threshold and the corresponding first current threshold based on the target network delay and the composition frame rate.

In a possible implementation, the drawing and rendering instruction includes characteristic parameters corresponding to a plurality of user interface (user interface, UI) controls, and the characteristic parameter includes a size and a location of the UI control; and that the graphics interface hook module determines a second network delay according to the drawing and rendering instruction includes: The graphics interface hook module determines, from the plurality of UI controls based on the characteristic parameters corresponding to the plurality of UI controls, a target UI control used to represent a network delay; the graphics interface hook module calculates pixel proportions of various colors included in the target UI control; and the graphics interface hook module determines the second network delay based on a color with a largest pixel proportion. In this way, when the target application is a game application, the second network delay can be calculated by using the characteristic parameter corresponding to the UI control, so that the first network delay and the second network delay can be applied to a process of making the network channel on/off decision and a feedback process after the network channel is turned on/off.

In a possible implementation, that the frame rate detection module calculates the composition frame rate based on the composition time at which each frame of image is composed includes: The frame rate detection module collects statistics about a quantity of times of obtaining the composition time in a preset period; and the frame rate detection module determines a ratio of the quantity of times to the preset period as the composition frame rate.

In a possible implementation, that the frame rate detection module calculates the composition frame rate based on the composition time at which each frame of image is composed includes: The frame rate detection module collects statistics about an average time interval between composition time of a plurality of most recent frames of images; and the frame rate detection module determines a reciprocal of the average time interval as the composition frame rate.

In a possible implementation, the M available network channels include a first network channel and a second network channel, the first network channel is a cellular channel, and the second network channel is a WiFi channel.

In a possible implementation, the target application is the game application. Therefore, before the electronic device transmits the data stream of the target application by using the target network channel in the M available network channels, the electronic device can further determine whether a currently running target application is a game application. If the currently running target application is the game application, the temperature of the electronic device is greater than the first temperature threshold and/or the output current of the battery is greater than the first current threshold, and there are the M available network channels in the plurality of network channels, the electronic device transmits the data stream of the target application by using the target network channel in the M available network channels.

According to a second aspect, an embodiment of this application provides an electronic device, including a memory and a processor, where the memory is configured to store a computer program, and the processor is configured to invoke the computer program, to perform the foregoing network channel control method.

According to a third aspect, an embodiment of this application provides a computer-readable storage medium. The computer-readable storage medium stores a computer program or instructions, and when the computer program or the instructions are run, the foregoing network channel control method is implemented.

According to a fourth aspect, an embodiment of this application provides a computer program product, including a computer program. When the computer program is run, a computer is enabled to perform the foregoing network channel control method.

Effects of various possible implementations of the second aspect to the fourth aspect are similar to effects of the first aspect and the possible designs of the first aspect, and details are not described herein again.

### BRIEF DESCRIPTION OF DRAWINGS

FIG. 1 is a diagram of software system interaction when data transmission is performed by using both a cellular channel and a WiFi channel according to a related technology;
FIG. 2 is a schematic diagram of a hardware system structure of an electronic device according to an embodiment of this application;
FIG. 3 is a schematic diagram of a software system structure of an electronic device according to an embodiment of this application;
FIG. 4 is a diagram of software system interaction of a network channel control method according to an embodiment of this application;
FIG. 5A to FIG. 5E are a diagram of a procedure architecture in a network channel decision process according to an embodiment of this application;
FIG. 6 is a diagram of a UI interface in a game scenario according to an embodiment of this application;
FIG. 7 is a diagram of a procedure architecture in a feedback process after a network channel decision is made according to an embodiment of this application;
FIG. 8 is a diagram of a procedure architecture in a feedback process after another network channel decision is made according to an embodiment of this application;
FIG. 9 is a diagram of a procedure architecture in a feedback process after still another network channel decision is made according to an embodiment of this application;
FIG. 10 is a schematic diagram of a structure of a network channel control apparatus according to an embodiment of this application; and
FIG. 11 is a schematic diagram of a structure of a chip according to an embodiment of this application.

### DESCRIPTION OF EMBODIMENTS

To clearly describe the technical solutions in the embodiments of this application, in the embodiments of this application, words such as "first" and "second" are used to distinguish between same items or similar items with basically the same functions and effects. For example, a first chip and a second chip are merely intended to distinguish between different chips, and are not intended to limit a sequence of the first chip and the second chip. A person skilled in the art may understand that the words such as "first" and "second" do not limit a quantity and an execution sequence, and the words such as "first" and "second" do not indicate a definite difference.

It should be noted that the words such as "example" or "for example" in the embodiments of this application are used to indicate an example, an illustration, or a description. Any embodiment or design solution described as an "example" or "for example" in this application should not be construed as being preferred or advantageous over other embodiments or design solutions. Exactly, use of the words such as "example" or "for example" is intended to present related concepts in a specific manner.

In the embodiments of this application, "at least one" means one or more, and "a plurality of" means two or more. "And/Or" describes an association relationship between associated objects, and represents that three relationships may exist. For example, "A and/or B" may represent the following cases: Only A exists, both A and B exist, and only B exists, where A and B may be singular or plural. The character "/" usually indicates an "or" relationship between associated objects. "At least one of the following items" or a similar expression thereof means any combination of these items, including a single item or any combination of a plurality of items. For example, at least one of a, b, or c may represent a, b, c, a-b, a-c, b-c, or a-b-c, where a, b, and c may be singular or plural.

With continuous development of electronic technologies, electronic devices such as a mobile phone and a tablet computer have become common tools in people's life and work. To meet various usage requirements of users, the user may download and install third-party applications such as a game application, a video chat application, an online live streaming application, and a video conferencing application on an electronic device.

In a process of using the electronic device, to ensure that some services in the electronic device can be normally performed, the electronic device may perform data transmission by using network channels such as a cellular channel and a WiFi channel.

However, in running processes of some applications installed on the electronic device, especially in a running scenario in which a network quality requirement is relatively high, to cope with a network fluctuation problem, a plurality of available network channels are usually used and data transmission is performed in a redundant packet sending manner. In this case, power consumption of the electronic device increases.

For example, when the game application is in a game battle scenario, when the video chat application is in an audio/video chat scenario, when the online live streaming application is in a live streaming scenario, and when the video conferencing application is in scenarios such as a video conferencing scenario, the electronic device may use a plurality of available network channels, and perform data transmission in a redundant packet sending manner.

For example, for the game application (for example, an application of Honor of Kings), after a network optimization function is enabled in the game application, when a game enters a battle scenario, the game application sends a data packet by using two network channels of a cellular channel and a WiFi channel, to implement data transmission. In a process of one specific battle, the game application sends a data packet by using two network channels of a cellular channel and a WiFi channel. After this battle ends, it is obtained, through statistics collecting, that total power consumption of the whole machine is 309.22 mAh, and service power consumption of the cellular channel is 39.45 mAh. It may be learned that the service power consumption of the cellular channel accounts for about 13% of the total power consumption of the whole machine.

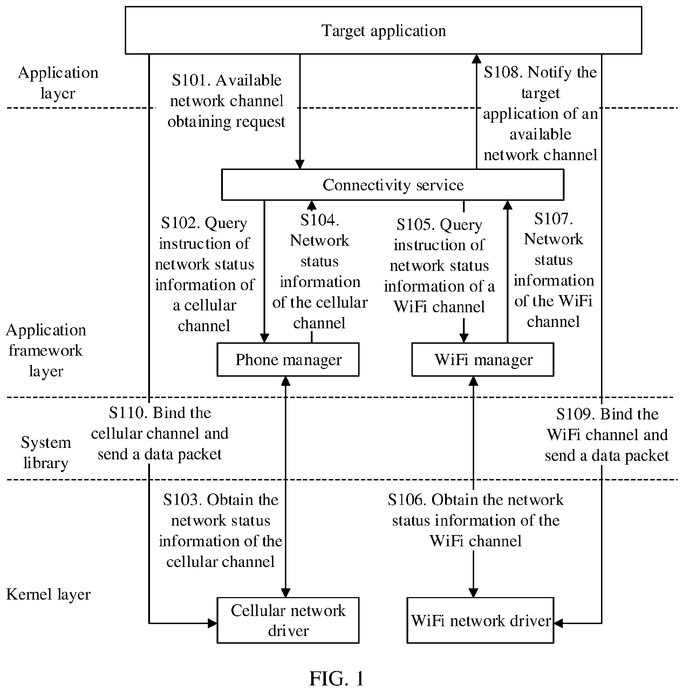

For example, FIG. 1 is a diagram of software system interaction when data transmission is performed by using both a cellular channel and a WiFi channel according to a related technology, which may be applied to an electronic device. For example, an operating system of the electronic device is an Android system, and the electronic device may include an application layer, an application framework layer, a system library, and a kernel layer. The application layer includes a running target application. The target application may be a game application, a video chat application, or the like. The application framework layer includes a connectivity service (connectivity service, CS), a phone manager, and a WiFi manager. The kernel layer includes a cellular network driver and a WiFi network driver. Referring to FIG. 1, the following steps may be specifically included.

S101. The target application sends an available network channel obtaining request to the connectivity service.

After the target application on the electronic device is started, the target application may send the available network channel obtaining request to the connectivity service at the application framework layer by invoking a requestNetwork interface.

The available network channel obtaining request may obtain an enabling status of each network channel and network quality information obtained when the enabling status is an available state. The enabling status of the network channel includes the available state and an unavailable state. The available state is used to indicate that the network channel can be enabled, and the unavailable state indicates that the network channel is prohibited from being enabled.

S102. The connectivity service sends a query instruction of network status information of the cellular channel to the phone manager in response to the available network channel obtaining request.

After receiving the available network channel obtaining request sent by the target application, the connectivity service may send the query instruction of the network status information of the cellular channel to the phone manager (telephony network factory) in response to the available network channel obtaining request, to query whether a current cellular channel is available and network quality information obtained when the cellular channel is in the available state.

S103. The phone manager obtains the network status information of the cellular channel by using the cellular network driver in response to the query instruction of the network status information of the cellular channel.

After receiving the query instruction that is of the network status information of the cellular channel and that is sent by the connectivity service, the phone manager obtains the network status information of the cellular channel by invoking the cellular network driver (namely, a modem driver) in response to the query request. The network status information of the cellular channel includes whether the cellular channel is available and the network quality information obtained when the cellular channel is in the available state.

Specifically, the electronic device further includes a mobile communication module located at a hardware layer. The phone manager may send the query instruction of the network status information of the cellular channel to the cellular network driver, so that the cellular network driver obtains the network status information of the cellular channel from the mobile communication module based on the query request. Then, the cellular network driver sends the obtained network status information of the cellular channel to the phone manager.

In some embodiments, the network quality information includes at least one of signal strength, bandwidth, and a signal-to-noise ratio (signal to interference plus noise ratio, SINR). The signal strength may be a received signal strength indication (received signal strength indication, RSSI). Certainly, it may be understood that the signal strength may alternatively be another specific parameter that represents the signal strength, and may be set based on a specific case. This is not limited in this embodiment of this application.

S 104. The phone manager sends the network status information of the cellular channel to the connectivity service.

S 105. The connectivity service sends a query instruction of network status information of the WiFi channel to the WiFi manager in response to the available network channel obtaining request.

After receiving the available network channel obtaining request sent by the target application, the connectivity service may send the query instruction of the network status information of the WiFi channel to the WiFi manager (WiFi network factory) in response to the available network channel obtaining request, to query whether a current WiFi channel is available and network quality information obtained when the WiFi channel is in the available state.

It may be understood that there is no fixed sequence between S102 and S105. After receiving the available network channel obtaining request sent by the target application, the connectivity service may send the query instruction to both the phone manager and the WiFi manager, that is, S102 and S105 may be performed in synchronization.

S106. The WiFi manager obtains the network status information of the WiFi channel by using the WiFi network driver in response to the query instruction of the network status information of the WiFi channel.

After receiving the query instruction that is of the network status information of the WiFi channel and that is sent by the connectivity service, the WiFi manager obtains the network status information of the WiFi channel by invoking the WiFi network driver in response to the query request. The network status information of the WiFi channel includes whether the WiFi channel is available and the network quality information obtained when the WiFi channel is in the available state.

Specifically, the electronic device further includes a wireless communication module located at the hardware layer. The WiFi manager may send the query instruction of the network status information of the WiFi channel to the WiFi network driver, so that the WiFi network driver obtains the network status information of the WiFi channel from the wireless communication module based on the query request. Then, the WiFi network driver sends the obtained network status information of the WiFi channel to the WiFi manager.

S107. The WiFi manager sends the network status information of the WiFi channel to the connectivity service.

S108. The connectivity service notifies the target application of an available network channel.

After receiving the network status information of the cellular channel sent by the phone manager and the network status information of the WiFi channel sent by the WiFi manager, the connectivity service notifies the target application of the available network channel by invoking an onAvailable(network) method.

S109. The target application is bound to the WiFi channel, and sends a data packet allocated on the WiFi channel to the WiFi network driver.

S110. The target application is bound to the cellular channel, and sends a data packet allocated on the cellular channel to the cellular network driver.

When the target application monitors and detects that there is an available network channel, the target application invokes a network.bindSocket function to perform a binding operation on a socket (socket), so that the target application is bound to the available network channel. The target application further copies all or some of data packets that need to be redundantly sent, and allocates a data packet that needs to be transmitted on each available network channel.

For example, when both the cellular channel and the WiFi channel are available network channels, the target application allocates data packets that need to be transmitted on the cellular channel and the WiFi channel, and then the target application sends the allocated data packets to the cellular network driver and the WiFi network driver. The cellular network driver sends the data packet to the mobile communication module, to send the data packet to a server corresponding to the target application by using the mobile communication module under corresponding network protocol control. Correspondingly, the WiFi network driver sends the data packet to the wireless communication module, to send the data packet to the server corresponding to the target application by using the wireless communication module under corresponding network protocol control.

For example, available network channels include a cellular channel and a WiFi channel, and there are 5 data packets in a data stream included in the target application, which are respectively a first data packet, a second data packet, a third data packet, a fourth data packet, and a fifth data packet. In this case, the target application may copy the first data packet, the third data packet, and the fifth data packet in the 5 data packets, allocate the cellular channel for transmitting the first data packet, the third data packet, and the fifth data packet, and allocate the WiFi channel for transmitting the first data packet, the second data packet, the third data packet, the fourth data packet, and the fifth data packet. That is, the cellular channel redundantly sends 3 data packets, and the data packets redundantly sent by the cellular channel are the same as some data packets sent by the WiFi channel. Therefore, the target application may send the first data packet, the third data packet, and the fifth data packet to the cellular network driver, to send the first data packet, the third data packet, and the fifth data packet to the server corresponding to the target application by using the cellular network driver and the mobile communication module. The target application may send the first data packet, the second data packet, the third data packet, the fourth data packet, and the fifth data packet to the WiFi network driver, to send the first data packet, the second data packet, the third data packet, the fourth data packet, and the fifth data packet to the server corresponding to the target application by using the WiFi network driver and the wireless communication module.

It may be understood that the server corresponding to the target application may respond to an earliest received data packet, to return a response data packet to the electronic device. For example, if the server corresponding to the target application first receives the first data packet transmitted by the WiFi channel, and then receives the first data packet transmitted by the cellular channel, the server corresponding to the target application may respond to the first data packet transmitted by the WiFi channel, to return a response data packet to the electronic device.

In some embodiments, formats of the data packets sent by the target application may be a user datagram protocol (user datagram protocol, UDP), a transmission control protocol (transmission control protocol, TCP), a real-time transport protocol (real-time transport protocol, RTP), and the like. For example, when the target application is a game application, a format of a data packet sent by the target application may be UDP. When the target application is a video chat application and is in a video chat scenario, a format of a data packet sent by the target application may be RTP.

In this case, the target application uses a plurality of available network channels and performs data transmission in a redundant packet sending manner, which causes increased power consumption of the electronic device.

Based on this, an embodiment of this application provides a network channel control method, including: obtaining a temperature of an electronic device and an output current of a battery in the electronic device; and in a running process of a target application, when the temperature is greater than a first temperature threshold and/or the output current is greater than a first current threshold, and there are M available network channels in a plurality of network channels, transmitting a data stream of the target application by using target network channels in the M available network channels, where the available network channel is a network channel on which data transmission is being performed and that is in an available state for the target application, the target network channels are N of the M available network channels, M is an integer greater than 1, N is an integer greater than or equal to 1, and N is less than M.

In this way, when the temperature of the electronic device is greater than the first temperature threshold and/or the output current of the battery is greater than the first current threshold, and there are the M available network channels in the plurality of network channels, a network channel on/off decision is triggered, the N available network channels are extracted from the M available network channels as the target network channels, to transmit the data stream of the target application, and another available network channel in the M available network channels other than the target network channels no longer transmits the data stream of the target application, thereby reducing power consumption of the electronic device.

The network channel control method provided in this embodiment of this application may be applied to the electronic device. The electronic device may also be referred to as a terminal (terminal), user equipment (user equipment, UE), a mobile station (mobile station, MS), a mobile terminal (mobile terminal, MT), or the like. The electronic device may be a mobile phone (mobile phone), a smart TV, a wearable device, a tablet computer (Pad), a computer having a wireless transceiver function, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. A specific technology and a specific device form that are used by the electronic device are not limited in the embodiments of this application.

To better understand the embodiments of this application, the following describes a structure of the electronic device in the embodiments of this application.

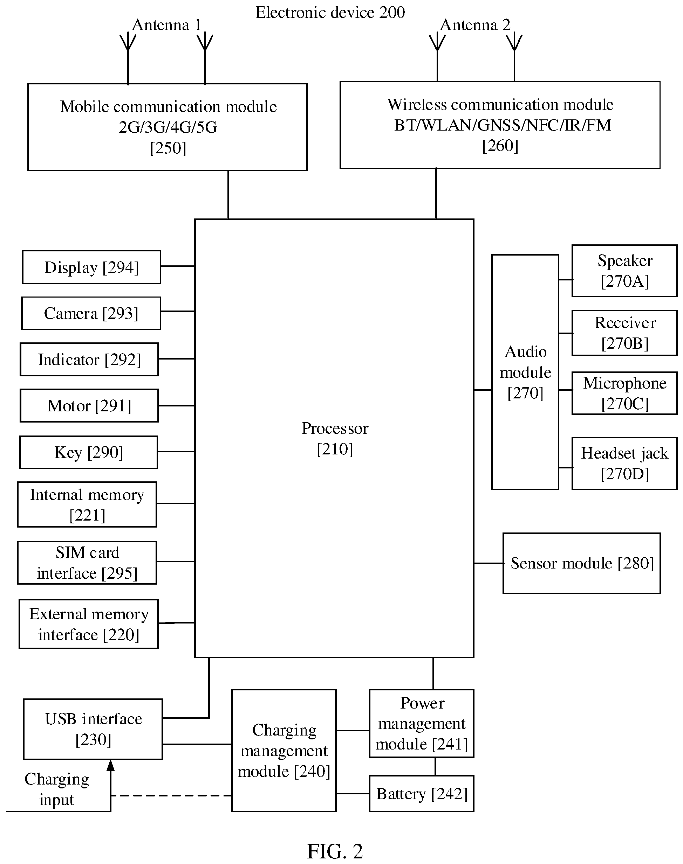

FIG. 2 is a schematic diagram of a structure of an electronic device 200. The electronic device 200 may include a processor 210, an external memory interface 220, an internal memory 221, a universal serial bus (universal serial bus, USB) interface 230, a charging management module 240, a power management module 241, a battery 242, an antenna 1, an antenna 2, a mobile communication module 250, a wireless communication module 260, an audio module 270, a speaker 270A, a receiver 270B, a microphone 270C, a headset jack 270D, a sensor module 280, a key 290, a motor 291, an indicator 292, a camera 293, a display 294, a subscriber identification module (subscriber identification module, SIM) card interface 295, and the like.

It may be understood that the structure illustrated in this embodiment of this application does not constitute a specific limitation on the electronic device 200. In some other embodiments of this application, the electronic device 200 may include more or fewer components than those shown in the figure, some components may be combined, some components may be split, or there may be different component arrangements. The components shown in the figure may be implemented by using hardware, software, or a combination of software and hardware.

The processor 210 may include one or more processing units. For example, the processor 210 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on an instruction operation code and a timing signal, to complete control of instruction fetching and instruction execution.

A memory may be further disposed in the processor 210 to store instructions and data. In some embodiments, the memory in the processor 210 is a cache memory. The memory may store instructions or data recently used or cyclically used by the processor 210. If the processor 210 needs to use the instructions or the data again, the processor may invoke the instructions or the data from the memory. This avoids repeated access and reduces waiting time of the processor 210, thereby improving system efficiency.

The charging management module 240 is configured to receive a charging input from a charger. The charger may be a wireless charger or a wired charger. The power management module 241 is configured to be connected to the battery 242, the charging management module 240, and the processor 210. The power management module 241 receives an input from the battery 242 and/or the charging management module 240, and supplies power to the processor 210, the internal memory 221, the display 294, the camera 293, the wireless communication module 260, and the like.

A wireless communication function of the electronic device 200 may be implemented by using the antenna 1, the antenna 2, the mobile communication module 250, the wireless communication module 260, the modem processor, the baseband processor, and the like.

The antenna 1 and the antenna 2 are configured to transmit and receive electromagnetic wave signals. The antennas of the electronic device 200 may be configured to cover one or more communication bands. Different antennas may be further multiplexed to improve antenna utilization. For example, the antenna 1 may be multiplexed as a diversity antenna of a wireless local area network. In some other embodiments, the antenna may be used in combination with a tuning switch.

The mobile communication module 250 may provide a solution for wireless communication that is applied to the electronic device 200 and that includes 2G/3G/4G/5G and the like. The mobile communication module 250 may include at least one filter, switch, power amplifier, low noise amplifier (low noise amplifier, LNA), and the like. The mobile communication module 250 may receive an electromagnetic wave by using the antenna 1, perform processing such as filtering and amplification on the received electromagnetic wave, and send a processed electromagnetic wave to the modem processor for demodulation. The mobile communication module 250 may further amplify a signal modulated by the modem processor, and convert the signal into an electromagnetic wave by using the antenna 1 for radiation. In some embodiments, at least some of functional modules of the mobile communication module 250 may be provided in the processor 210. In some embodiments, at least some functional modules of the mobile communication module 250 may be disposed in a same component as at least some modules of the processor 210.

The modem processor may include a modulator and a demodulator. The modulator is configured to modulate a to-be-sent low frequency baseband signal into a medium or high frequency signal. The demodulator is configured to demodulate a received electromagnetic wave signal into a low frequency baseband signal. Then, the demodulator transfers, to the baseband processor for processing, the low frequency baseband signal obtained through demodulation. The low frequency baseband signal is processed by the baseband processor and then transferred to the application processor. The application processor outputs a sound signal by using an audio device (not limited to the speaker 270A, the receiver 270B, or the like), or displays an image or a video by using the display 294. In some embodiments, the modem processor may be an independent device. In some other embodiments, the modem processor may be independent of the processor 210 and be disposed in a same component as the mobile communication module 250 or another functional module.

The wireless communication module 260 may provide a solution for wireless communication that is applied to the electronic device 200 and that includes a wireless local area network (wireless local area networks, WLAN) (for example, a WiFi network), Bluetooth (bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 260 may be one or more components integrated with at least one communication processing module. The wireless communication module 260 receives an electromagnetic wave by using the antenna 2, performs frequency modulation and filtering processing on an electromagnetic wave signal, and sends a processed signal to the processor 210. The wireless communication module 260 may further receive a to-be-sent signal from the processor 210, perform frequency modulation and amplification on the signal, and convert the signal into an electromagnetic wave by using the antenna 2 for radiation.

In some embodiments, the antenna 1 of the electronic device 200 is coupled to the mobile communication module 250, and the antenna 2 is coupled to the wireless communication module 260, so that the electronic device 200 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS), and/or a satellite based augmentation system (satellite based augmentation systems, SBAS).

The electronic device 200 implements a display function by using the GPU, the display 294, the application processor, and the like. The GPU is a microprocessor for image processing and connects the display 294 and the application processor. The GPU is configured to perform mathematical and geometric calculation for graphics rendering. The processor 210 may include one or more GPUs that execute program instructions to generate or change displayed information.

The electronic device 200 can implement a shooting function by using the ISP, the camera 293, the video codec, the GPU, the display 294, the application processor, and the like.

The external memory interface 220 may be configured to be connected to an external memory card, for example, a Micro SD card, to extend a storage capability of the electronic device 200. The external memory card communicates with the processor 210 through the external memory interface 220 to implement a data storage function, for example, to store files such as music and a video in the external memory card.

The internal memory 221 may be configured to store computer-executable program code, and the executable program code includes instructions. The internal memory 221 may include a program storage area and a data storage area. The program storage area may store an operating system, an application required by at least one function (for example, a sound playing function or an image playing function), and the like. The data storage area may store data (for example, audio data and a phone book) created during use of the electronic device 200. In addition, the internal memory 221 may include a high-speed random access memory, and may further include a nonvolatile memory, for example, at least one magnetic disk storage device, a flash memory device, or a universal flash storage (universal flash storage, UFS). The processor 210 runs the instructions stored in the internal memory 221, and/or the instructions stored in the memory disposed in the processor, to perform various function applications and data processing of the electronic device 200.

The electronic device 200 may implement an audio function by using the audio module 270, the speaker 270A, the receiver 270B, the microphone 270C, the headset jack 270D, the application processor, and the like. For example, music playing and sound recording are implemented.

The key 290 includes a power-on/off key, a volume key, and the like. The key 290 may be a mechanical key, or may be a touch key. The electronic device 200 may receive key input and generate a key signal input related to user settings and function control of the electronic device 200.

The motor 291 may generate a vibration prompt. The motor 291 may be configured to provide a vibration prompt for an incoming call, and may alternatively be configured to provide vibration feedback for touch. The indicator 292 may be an indicator light, and may be configured to indicate a charging state, a power change, a message, a missed incoming call, a notification, and the like. The SIM card interface 295 is configured to be connected to a SIM card. The SIM card may be inserted into the SIM card interface 295 or removed from the SIM card interface 295 to implement contact with and separation from the electronic device 200.

A software system of the electronic device 200 may use a layered architecture, an eventdriven architecture, a microkernel architecture, a microservice architecture, a cloud architecture, or the like. In embodiments of this application, an Android system with a layered architecture is used as an example to describe a software structure of the electronic device 200.

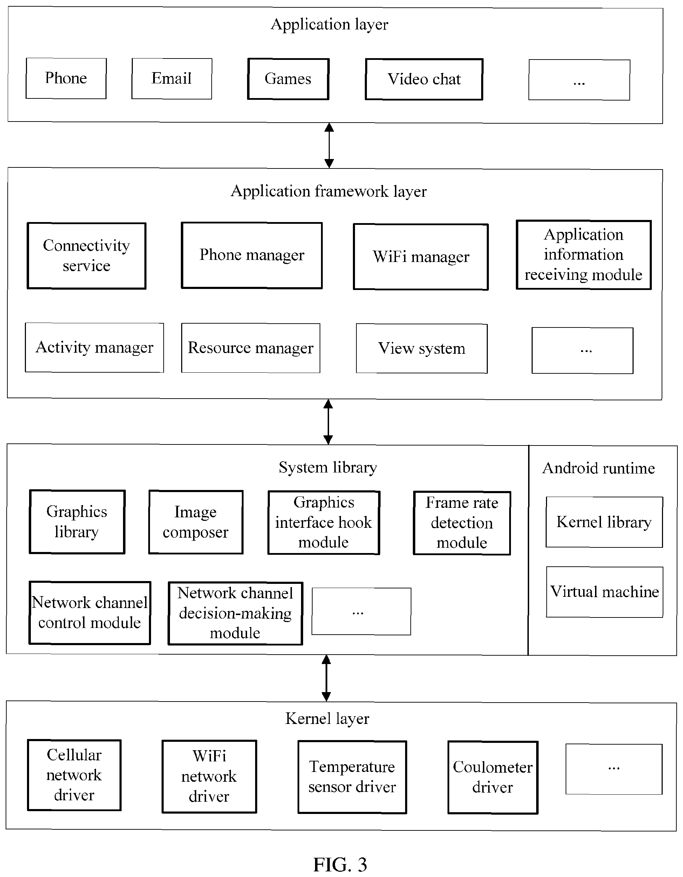

FIG. 3 is a block diagram of a software structure of an electronic device according to an embodiment of this application. In the layered architecture, software is divided into several layers, and each layer has a clear role and task. The layers communicate with each other through software interfaces. In some embodiments, the Android system is divided into four layers: an application layer, an application framework layer, an Android runtime (Android runtime) and system library, and a kernel layer from top to bottom.

The application layer may include a series of application packages. As shown in FIG. 3, the application package may include applications such as Phone, Email, Game, and Video chat.

The application framework layer provides an application programming interface (application programming interface, API) and a programming framework for an application at the application layer. The application framework layer includes some predefined functions.

As shown in FIG. 3, the application framework layer may include a connectivity service, a phone manager, a WiFi manager, an application information receiving module, an activity manager, a resource manager, a view system, and the like.

The connectivity service is configured to: in response to an available network channel obtaining request sent by a target application, send a query instruction of network status information of a cellular channel to the phone manager, and send a query instruction of network status information of a WiFi channel to the WiFi manager. In addition, the connectivity service may further receive the network status information of the cellular channel returned by the phone manager and receive the network status information of the WiFi channel returned by the WiFi manager, and notify the target application of an available network channel. The network status information of the cellular channel includes an enabling status of the cellular channel and network quality information obtained when the enabling status is an available state. The network status information of the WiFi channel includes an enabling status of the WiFi channel and network quality information obtained when the enabling status is an available state.

In addition, when a network channel on which data transmission is being performed includes the cellular channel, the connectivity service may further receive first data monitoring information sent by the phone manager, and the first data monitoring information may include identification information of a cellular channel on which data transmission is being performed, and the like. When a network channel on which data transmission is being performed includes the WiFi channel, the connectivity service may further receive second data monitoring information sent by the WiFi manager, and the second data monitoring information may include identification information of a WiFi channel on which data transmission is being performed, and the like.

In addition, the connectivity service may further send network status information of each network channel and identification information of the network channel on which data transmission is being performed to a network channel control module, receive a network on/off decision result sent by the network channel control module, and send a first control instruction to the phone manager and/or send a second control instruction to the WiFi manager based on the network on/off decision result. The first control instruction is used to control a mobile communication module not to transmit a data stream of the target application, and the second control instruction is used to control a wireless communication module not to transmit the data stream of the target application.

The phone manager is configured to provide a management function of a cellularrelated service of the electronic device. For example, the phone manager is configured to provide call status (including answering, hanging up, and the like) management and cellular data connection status (including establishing a connection to a cellular network, disconnecting from a cellular network, being establishing a connection to a cellular network, being disconnecting from a cellular network, and the like) management.

It may be understood that the cellular network may include a 2G network, a 3G network, a 4G network, a 5G network (for example, an SA network), and the like.

In some embodiments, the phone manager is configured to: in response to the query instruction that is of the network status information of the cellular channel and that is sent by the connectivity service, invoke the cellular network driver to obtain the network status information of the cellular channel, and send the obtained network status information of the cellular channel to the connectivity service. In addition, the phone manager is further configured to transmit the first control instruction sent by the connectivity service to the cellular network driver. In addition, the phone manager may further monitor, by using the cellular network driver, whether data transmission is being performed on the cellular channel. When the network channel on which data transmission is being performed includes the cellular channel, the phone manager sends the first data monitoring information to the connectivity service, and the first data monitoring information may include the identification information of the cellular channel on which data transmission is being performed, and the like.

The WiFi manager is configured to provide a management function of a WiFi-related service of the electronic device. In some embodiments, the WiFi manager is configured to: in response to the query instruction that is of the network status information of the WiFi channel and that is sent by the connectivity service, invoke the WiFi network driver to obtain the network status information of the WiFi channel, and send the obtained network status information of the WiFi channel to the connectivity service. In addition, the WiFi manager is further configured to transmit the second control instruction sent by the connectivity service to the WiFi network driver. In addition, the WiFi manager may further monitor, by using the WiFi network driver, whether data transmission is being performed on the WiFi channel. When the network channel on which data transmission is being performed includes the WiFi channel, the WiFi manager sends the second data monitoring information to the connectivity service, and the second data monitoring information may include the identification information of the WiFi channel on which data transmission is being performed, and the like.

The application information receiving module is configured to receive a first network delay delivered by the target application, and send the first network delay to a network channel decision-making module.

The activity manager is configured to manage a lifecycle of each application and a navigation rollback function, and is responsible for creating a main thread of Android, and maintaining the lifecycle of each application.

The resource manager provides various resources for the application, for example, a localized string, an icon, a picture, a layout file, and a video file.

The view system includes visual controls, for example, a control for displaying a text and a control for displaying a picture. The view system may be configured to build an application. A display interface may include one or more views. For example, a display interface including an SMS message notification icon may include a view for displaying a text and a view for displaying a picture.

The Android runtime includes a kernel library and a virtual machine. The Android runtime is responsible for scheduling and managing an Android system.

The kernel library includes two parts: One part is a functional function that needs to be invoked in a java language, and the other part is a kernel library of Android.

The application layer and the application framework layer run on the virtual machine. The virtual machine executes java files at the application layer and the application framework layer as binary files. The virtual machine is configured to perform functions such as lifecycle management of an object, stack management, thread management, security and exception management, and garbage collection.

The system library may include a plurality of functional modules, for example, a graphics library, an image composer (surface flinger, SF), a graphics interface hook module, a frame rate detection module, the network channel control module, and the network channel decision-making module.

The graphics library, also referred to as a drawing library, is used to define a crossprogramming language and cross-platform API, and includes many functions for processing graphics. For example, the graphics library may include a libEGL graphics library, and the target application may draw and render an image by invoking the graphics library.

In a possible implementation, the target application draws and renders an image by invoking the graphics library, and then the target application transmits a drawn and rendered image to a buffer queue of the image composer. Whenever a vertical synchronization (vertical synchronization, Vsync) signal arrives, the image composer sequentially obtains a frame of to-be-composed image from the buffer queue, and then composes the image.

The graphics interface hook (hook) module obtains a drawing and rendering instruction from the graphics library by replacing a graphics library interface (which is an existing function of an OpenGL), determines, from a plurality of UI controls based on characteristic parameters corresponding to the plurality of UI controls in the rendering instruction, a target UI control used to represent a network delay, calculates pixel proportions of various colors included in the target UI control, determines a second network delay based on a color with a largest pixel proportion, and sends the second network delay to the network channel decision-making module.

The frame rate detection module is configured to: when the image composer composes the drawn and rendered image, obtain composition time at which each frame of image is composed, calculate a composition frame rate based on the composition time at which each frame of image is composed, and send the calculated composition frame rate to the network channel decision-making module.

The network channel control module is configured to receive the network status information of each network channel and the identification information of the network channel on which data transmission is being performed that are sent by the connectivity service, and send the network status information of each network channel and the identification information of the network channel on which data transmission is being performed to the network channel decision-making module. The network channel control module is further configured to receive the network on/off decision result sent by the network channel decision-making module, and send the network on/off decision result to the connectivity service.

The network channel decision-making module is configured to: receive a temperature of the electronic device sent by a temperature sensor driver and an output current of a battery sent by a coulometer driver; when it is determined that the temperature of the electronic device is greater than a first temperature threshold and/or the output current of the battery is greater than a first current threshold, and there are, in a plurality of network channels, M available network channels on which data transmission is being performed and that are in an available state for the target application, select N available network channels from the M available network channels as target network channels; and send the network on/off decision result to the network channel control module, where M is an integer greater than 1, N is an integer greater than or equal to 1, and N is less than M.

In addition, the network channel decision-making module may further select a proper first temperature threshold and a proper first current threshold based on the first network delay sent by the application information receiving module, the second network delay sent by the graphics interface hook module, and the composition frame rate sent by the frame rate detection module.

In addition, after the target network channels in the M available network channels are controlled based on the network on/off decision result to transmit the data stream of the target application instead of transmitting the data stream of the target application by using another available network channel in the M available network channels other than the target network channels, the network channel decision-making module may further re-determine, based on a temperature of the electronic device obtained again, an output current of the battery obtained again, a first network delay obtained again, a second network delay obtained again, and a composition frame rate of an image obtained again, a target network channel used to transmit the data stream of the target application.

The kernel layer is a layer between hardware and software. The kernel layer includes at least the cellular network driver, the WiFi network driver, the temperature sensor driver, the coulometer driver, and the like.

The hardware may be the mobile communication module, the wireless communication module, the temperature sensor, a coulometer, and the like.

In some embodiments, the cellular network driver may obtain the network status information of the cellular channel from the mobile communication module, and send the network status information of the cellular channel to the phone manager. In addition, the cellular network driver may further control, according to the first control instruction, the mobile communication module not to transmit the data stream of the target application.

The WiFi network driver may obtain the network status information of the WiFi channel from the wireless communication module, and send the network status information of the WiFi channel to the WiFi manager. In addition, the WiFi network driver may further control, according to the second control instruction, the wireless communication module not to transmit the data stream of the target application.

The temperature sensor driver is configured to obtain an actual temperature of a target component collected by the temperature sensor, determine the temperature of the electronic device based on the actual temperature, and send the temperature of the electronic device to the network channel decision-making module.

The coulometer driver is configured to obtain the output current of the battery collected by the coulometer, and send the output current of the battery to the network channel decision-making module.

It should be noted that although the Android system is used as an example for description in the embodiments of this application, a principle of the network channel control method is also applicable to an electronic device having an operating system such as iOS or windows.

The following describes, in detail by using specific embodiments, the technical solutions of this application and how the foregoing technical problems are resolved by using the technical solutions of this application. The following several specific embodiments may be implemented independently, or may be combined with each other. For same or similar concepts or processes, details may not be described in some embodiments again.

In this embodiment of this application, after a network optimization function is enabled in a game application (for example, an application of Honor of Kings), a plurality of available network channels are used to carry a data stream corresponding to the game application. In a video chat scenario of a video chat application (for example, WeChat), a plurality of available network channels are also used to carry a data stream corresponding to the video chat application. Certainly, application scenarios of this embodiment of this application are not limited to the foregoing two scenarios, and it is applicable provided that a scenario in which a plurality of available network channels are used to carry a data stream in an application running process. This is not limited in this embodiment of this application.

In addition, a quantity of available network channels that may be used to transmit the data stream included in the target application is M, where M is an integer greater than 1. The available network channel may be the cellular channel, the WiFi channel, another network channel, or the like.

For example, in this embodiment of this application, a quantity of the available network channels may be 2, that is, M is equal to 2. The two available network channels are respectively a first network channel and a second network channel, and quantities of the first network channel and the second network channel are both 1. The first network channel may be a cellular channel, and the second network channel may be a WiFi channel. Alternatively, both the first network channel and the second network channel may be cellular channels, and the two cellular channels are different. For example, two SIM cards are installed in the electronic device. One SIM card may support the first cellular channel, and the other SIM card may support the second cellular channel. Alternatively, both the first network channel and the second network channel may be WiFi channels, and the two WiFi channels are different. For example, the electronic device may support dual WiFi connections. One WiFi channel may be a 2.4 GHz band network, and the other WiFi channel may be a 5 GHz band network.

Certainly, the quantity of the available network channels in this embodiment of this application may alternatively be greater than 2, that is, M is an integer greater than 2. For example, the M available network channels may include one cellular channel and at least two WiFi channels. Alternatively, the M available network channels may include one WiFi channel and at least two cellular channels. Alternatively, the M available network channels may include at least two cellular channels and at least two WiFi channels.

The following describes an implementation of the network channel control method provided in this embodiment of this application by using an example in which the M available network channels include the first network channel and the second network channel, the first network channel is a cellular channel, the second network channel is a WiFi channel, and quantities of the first network channel and the second network channel are both 1.

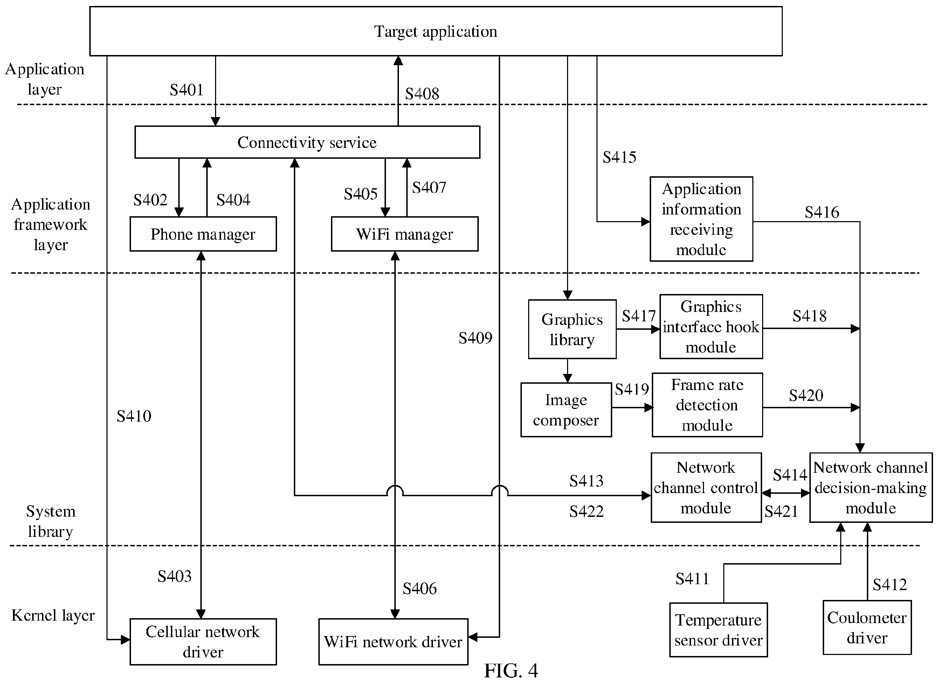

For example, FIG. 4 is a diagram of software system interaction of a network channel control method according to an embodiment of this application. Referring to FIG. 4, the network channel control method may be applied to an electronic device. That an operating system of the electronic device is an Android system is used as an example. The electronic device may include an application layer, an application framework layer, a system library, and a kernel layer. The application layer includes a running target application, and the target application may be a game application, a video chat application, or the like. The application framework layer includes a connectivity service, a phone manager, a WiFi manager, and an application information receiving module. The system library includes a graphics library, an image composer, a graphics interface hook module, a frame rate detection module, a network channel control module, and a network channel decision-making module. The kernel layer includes a cellular network driver, a WiFi network driver, a temperature sensor driver, and a coulometer driver. In addition, the electronic device may further include a hardware layer (not shown in FIG. 4), and the hardware layer includes a mobile communication module, a wireless communication module, a temperature sensor, and a coulometer.

As shown in FIG. 4, the network channel control method may specifically include the following steps.

S401. The target application sends an available network channel obtaining request to the connectivity service.

S402. The connectivity service sends a query instruction of network status information of the cellular channel to the phone manager in response to the available network channel obtaining request.

S403. The phone manager obtains the network status information of the cellular channel by using the cellular network driver in response to the query instruction of the network status information of the cellular channel.

S404. The phone manager sends the network status information of the cellular channel to the connectivity service.

That is, the cellular network driver may obtain the network status information of the cellular channel from the mobile communication module, and send the network status information of the cellular channel to the connectivity service by using the phone manager.

S405. The connectivity service sends a query instruction of network status information of the WiFi channel to the WiFi manager in response to the available network channel obtaining request.

S406. The WiFi manager obtains the network status information of the WiFi channel by using the WiFi network driver in response to the query instruction of the network status information of the WiFi channel.

S407. The WiFi manager sends the network status information of the WiFi channel to the connectivity service.

That is, the WiFi network driver may obtain the network status information of the WiFi channel from the wireless communication module, and send the network status information of the WiFi channel to the connectivity service by using the WiFi manager.

S408. The connectivity service notifies the target application of an available network channel.

It should be noted that a specific implementation process of S401 to S408 is similar to the foregoing specific implementation process of S101 to S108. To avoid repetition, details are not described herein again.

S409. The target application is bound to the WiFi channel, and sends a data packet allocated on the WiFi channel to the WiFi network driver.

S410. The target application is bound to the cellular channel, and sends a data packet allocated on the cellular channel to the cellular network driver.

When the target application monitors and detects that there is an available network channel, the target application is bound to the available network channel. In addition, the target application further copies all or some of data packets that need to be redundantly sent, and allocates a data packet that needs to be transmitted on each available network channel. Finally, the target application may send allocated data packets to the cellular network driver and the WiFi network driver. The cellular network driver may send a corresponding data packet to the mobile communication module, and the WiFi network driver may send a corresponding data packet to the wireless communication module.

S411. The temperature sensor driver sends a temperature of the electronic device to the network channel decision-making module.

In a process of using the electronic device, the network channel decision-making module needs to continuously obtain device status information. The device status information may be specifically divided into two parts, a first part is hot data, and a second part is power consumption data. The hot data may be represented by temperatures at some specified locations in the electronic device, and the power consumption data may be represented by an output current of a battery in the electronic device (a hardware node corresponding to the power consumption data is VPH_PWR). That is, the device status information may include the temperature of the electronic device and the output current of the battery in the electronic device.

Specifically, the temperature sensor driver obtains an actual temperature of a target component collected by the temperature sensor. The temperature sensor driver determines the temperature of the electronic device based on the actual temperature. The temperature sensor driver sends the temperature of the electronic device to the network channel decision-making module.

In some embodiments, the temperature sensor is disposed near the target component in the electronic device, and the actual temperature of the target component may be detected in real time by using the temperature sensor. The temperature sensor may report the detected actual temperature of the target component to the temperature sensor driver. For example, the target component may be a battery, that is, a temperature of the battery is detected in real time by using the temperature sensor.

In a possible implementation, the temperature sensor driver may convert the actual temperature of the target component into the temperature of the electronic device by using a preset temperature conversion algorithm. For example, the target component may be the battery, the temperature of the electronic device may be a fitting temperature of a backplane in the electronic device, and the fitting temperature of the backplane may also be referred to as a fitting housing temperature. In this case, the temperature sensor driver may convert an actual temperature of the battery into a fitting housing temperature by using the preset temperature conversion algorithm.

In another possible implementation, the temperature sensor driver may directly determine the actual temperature of the target component as the temperature of the electronic device. For example, the target component may be a battery, and the temperature of the electronic device is an actual temperature of the battery.

It should be noted that a type of the temperature sensor is not limited in this embodiment of this application, and the temperature sensor may be a negative temperature coefficient (negative temperature coefficient, NTC) temperature sensor or another type of temperature sensor. In addition, the temperature sensor driver may obtain, based on a preset sampling period, the actual temperature collected by the temperature sensor. To be specific, the temperature sensor driver obtains the actual temperature of the target component once at one sampling period. For example, the preset sampling period may be 5 seconds or the like.

S412. The coulometer driver sends the output current of the battery to the network channel decision-making module.

Specifically, the coulometer driver obtains the output current of the battery collected by the coulometer. The coulometer driver sends the output current to the network channel decision-making module.

In some embodiments, the coulometer may be disposed on a battery protection board of the electronic device. The coulometer may collect parameters such as the output current and an output voltage of the battery, and the coulometer may report the collected output current of the battery to the coulometer driver. Then, the coulometer driver sends the output current of the battery to the network channel decision-making module.

S413. The connectivity service sends the network status information of the cellular channel, the network status information of the WiFi channel, and identification information of a network channel on which data transmission is being performed to the network channel control module.

S414. The network channel control module sends the network status information of the cellular channel, the network status information of the WiFi channel, and the identification information of the network channel on which data transmission is being performed to the network channel decision-making module.

In an execution process of the foregoing S404, the phone manager sends the network status information of the cellular channel to the connectivity service, and the connectivity service may save the network status information of the cellular channel. In an execution process of the foregoing S407, the WiFi manager sends the network status information of the WiFi channel to the connectivity service, and the connectivity service may save the network status information of the WiFi channel.

In addition, in a process of using the electronic device, the phone manager may further monitor, by using the cellular network driver, whether data transmission is being performed on the cellular channel. When the network channel on which data transmission is being performed includes the cellular channel, the phone manager sends first data monitoring information to the connectivity service, and the first data monitoring information may include identification information of a cellular channel on which data transmission is being performed, and the like. The WiFi manager may further monitor, by using the WiFi network driver, whether data transmission is being performed on the WiFi channel. When the network channel on which data transmission is being performed includes the WiFi channel, the WiFi manager sends second data monitoring information to the connectivity service, and the second data monitoring information may include identification information of a WiFi channel on which data transmission is being performed, and the like.

The connectivity service may send the saved network status information of the cellular channel, the network status information of the WiFi channel, and the identification information of the network channel on which data transmission is being performed to the network channel control module. Then, the network channel control module sends the network status information of the cellular channel, the network status information of the WiFi channel, and the identification information of the network channel on which data transmission is being performed to the network channel decision-making module.

The network status information includes an enabling status of the network channel and network quality information obtained when the enabling status is an available state. The enabling status includes an available state or an unavailable state, and the network quality information includes at least one of signal strength, bandwidth, and a signal-to-noise ratio.

For example, when an enabling status in the network status information of the cellular channel is the available state, an enabling status in the network status information of the WiFi channel is also the available state. In addition, when the identification information of the network channel on which data transmission is being performed includes the identification information of the cellular channel and the identification information of the WiFi channel, both the cellular channel and the WiFi channel are available network channels.

S415. The target application sends a first network delay to the application information receiving module.

S416. The application information receiving module sends the first network delay to the network channel decision-making module.

In some embodiments, when determining whether one or more network channels currently need to be disconnected to not transmit a data stream of the target application, the network channel decision-making module may be further based on the first network delay, a second network delay, and a composition frame rate of an image in addition to the device status information obtained in the foregoing S411 and S412.

The first network delay is a network delay delivered by the target application, and may be referred to as a server network delay. In a possible implementation, when the target application sends a data packet to a corresponding server, the data packet may carry a first timestamp at which the data packet is sent. When the server returns a response data packet to the target application, the response data packet may also carry a second timestamp at which the response data packet is sent. In this case, after the target application receives the response data packet, the target application determines a time difference between the second timestamp and the first timestamp as the first network delay.

The target application may send the first network delay to the application information receiving module. In a possible implementation, the target application may be integrated with a corresponding data interface, and the electronic device has a service (service) adapted to the target application for delivering information. The target application may send the first network delay to the application information receiving module by using the data interface and the service.

After receiving the first network delay delivered by the target application, the application information receiving module sends the first network delay to the network channel decision-making module.

S417. When the target application invokes the graphics library to draw and render an image, the graphics interface hook module obtains a drawing and rendering instruction from the graphics library.

S418. The graphics interface hook module determines the second network delay according to the drawing and rendering instruction, and sends the second network delay to the network channel decision-making module.

To enable a display of the electronic device to display a user interface corresponding to the target application, the target application invokes the graphics library to draw and render the image. In a process in which the target application invokes the graphics library to draw and render the image, the graphics interface hook module may obtain the drawing and rendering instruction from the graphics library. The drawing and rendering instruction may include characteristic parameters corresponding to a plurality of UI controls, and each characteristic parameter includes a size and a location of the UI control.

After obtaining the drawing and rendering instruction, the graphics interface hook module determines the second network delay based on information such as the characteristic parameter corresponding to the UI control in the drawing and rendering instruction, and sends the second network delay to the network channel decision-making module.

The second network delay may also be referred to as a UI network delay, and is determined based on the UI control in the user interface.

S419. When the image composer composes a drawn and rendered image, the frame rate detection module obtains composition time at which each frame of image is composed.

S420. The frame rate detection module calculates a composition frame rate based on the composition time at which each frame of image is composed, and send the composition frame rate to the network channel decision-making module.

After the image is drawn and rendered by invoking the graphics library, the target application sends the drawn and rendered image to a buffer queue of the image composer. Whenever a Vsync signal arrives, the image composer sequentially obtains a frame of to-be-composed image from the buffer queue, and then composes the image.

When the image composer composes the drawn and rendered image, the frame rate detection module may obtain, from the image composer, the composition time at which each frame of image is composed. Then, the frame rate detection module calculates the composition frame rate of the image based on the composition time at which each frame of image is composed, and sends the composition frame rate of the image to the network channel decision-making module.

It should be noted that an execution process of sending the temperature of the electronic device to the network channel decision-making module in the foregoing S411, an execution process of sending the output current of the battery to the network channel decision-making module in the foregoing S412, an execution process of sending the network status information of the cellular channel, the network status information of the WiFi channel, and the identification information of the network channel on which data transmission is being performed to the network channel decision-making module in the foregoing S414, an execution process of sending the first network delay to the network channel decision-making module in the foregoing S416, an execution process of sending the second network delay to the network channel decision-making module in the foregoing S418, and an execution process of sending the composition frame rate to the network channel decision-making module in the foregoing S420 have no fixed sequence. Corresponding operations may be executed, for example, executed in parallel, based on an actual situation.

S421. The network channel decision-making module generates a network on/off decision result based on the temperature of the electronic device, the output current of the battery, the first network delay, the second network delay, the composition frame rate, the network status information of the cellular channel, the network status information of the WiFi channel, and the identification information of the network channel on which data transmission is being performed, and sends the network on/off decision result to the network channel control module.

In some embodiments, when the network channel decision-making module determines that the temperature of the electronic device is greater than the first temperature threshold and/or the output current is greater than the first current threshold, and the cellular channel and the WiFi channel are the available network channels, the network channel decision-making module selects one available network channel from the cellular channel and the WiFi channel as the target network channel based on network quality information of the cellular channel and network quality information of the WiFi channel. After determining the target network channel, the network channel decision-making module sends the network on/off decision result to the network channel control module. The network on/off decision result is used to indicate to transmit the data stream of the target application by using the target network channel instead of transmitting the data stream of the target application by using another available network channel in the M available network channels other than the target network channel.

For example, when the network channel decision-making module selects the WiFi channel from the cellular channel and the WiFi channel as the target network channel, the network on/off decision result is used to indicate to transmit the data stream of the target application by using the WiFi channel instead of transmitting the data stream of the target application by using the cellular channel.

The first network delay, the second network delay, and the composition frame rate are mainly used to select a proper first temperature threshold and a proper first current threshold when it is determined whether to trigger a network channel on/off decision. Specifically, the network channel decision-making module determines a target network delay based on the first network delay and/or the second network delay; and the network channel decision-making module selects the corresponding first temperature threshold and the corresponding first current threshold based on the target network delay and the composition frame rate.

When the target network delay and the composition frame rate change, a first temperature threshold selected by the network channel decision-making module is different, and a selected first current threshold is also different.

S422. The network channel control module sends the network on/off decision result to the connectivity service, so that the connectivity service controls, based on the network on/off decision result, the cellular channel or the WiFi channel to transmit the data stream of the target application.

In some embodiments, the network channel control module may send the network on/off decision result to the connectivity service, and the connectivity service may control, based on the network on/off decision result, the cellular channel or the WiFi channel to transmit the data stream of the target application.

For example, when the network on/off decision result is used to indicate to transmit the data stream of the target application by using the WiFi channel instead of transmitting the data stream of the target application by using the cellular channel, the connectivity service may send a first control instruction to the cellular network driver by using the phone manager, and the cellular network driver controls, according to the first control instruction, the mobile communication module not to transmit the data stream of the target application. In this case, after the target application sends allocated data packets to the cellular network driver, and then the cellular network driver sends the data packets to the mobile communication module, the mobile communication module may discard these data packet.

When the network on/off decision result is used to indicate to transmit the data stream of the target application by using the cellular channel instead of transmitting the data stream of the target application by using the WiFi channel, the connectivity service may send a second control instruction to the WiFi network driver by using the WiFi manager, and the WiFi network driver controls, according to the second control instruction, the wireless communication module not to transmit the data stream of the target application. In this case, after the target application sends allocated data packets to the WiFi network driver, and then the WiFi network driver sends the data packets to the wireless communication module, the wireless communication module may discard these data packet.

It should be noted that a data stream corresponding to the target application is a data stream that is in a running process of the target application and that needs to be sent to the server. A data stream is an ordered set of byte data sequences with a start point and an end point. In the communication field, transmission of multimedia resources such as a text, a picture, audio, and a video may be understood as transmission of a data stream. For example, a data stream sent in a video chat scenario of the video chat application includes a video stream, an audio stream, and the like.

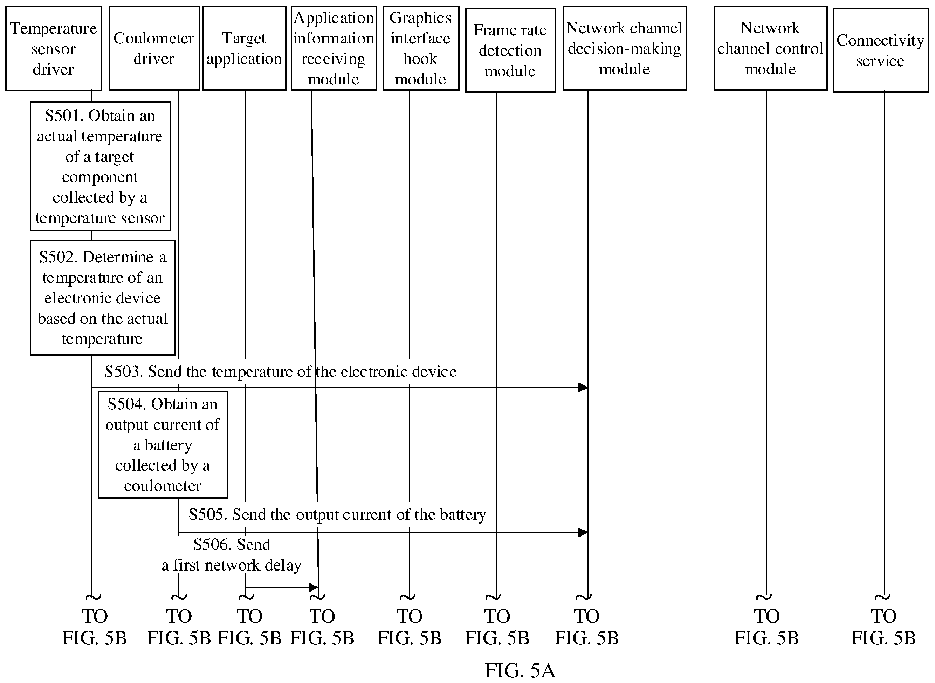

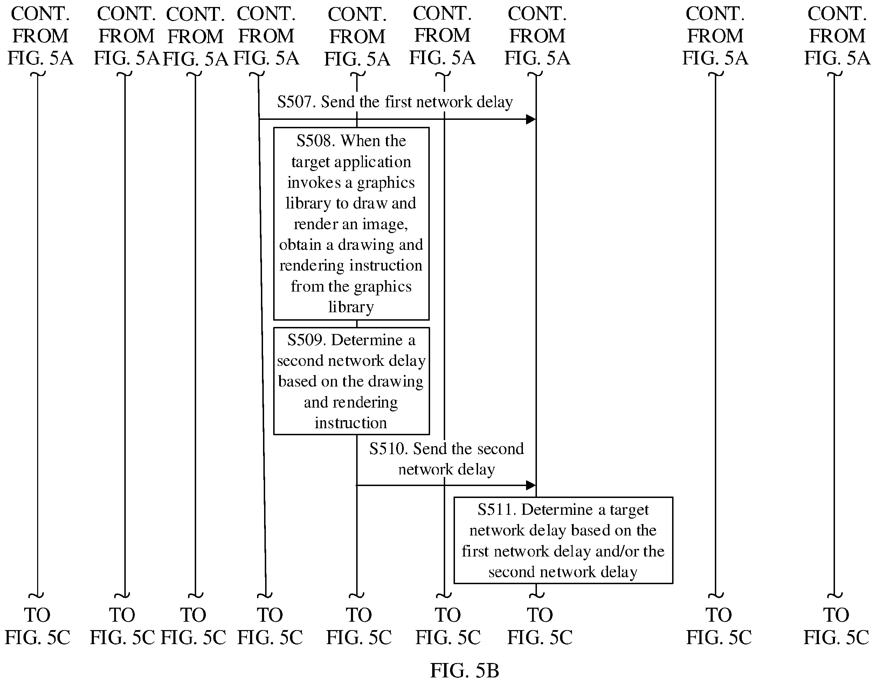

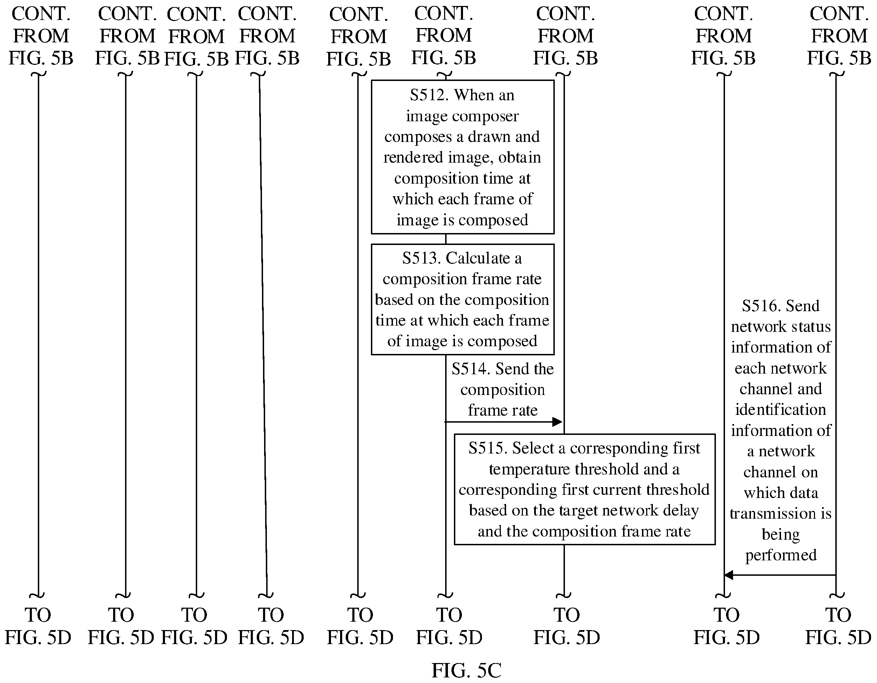

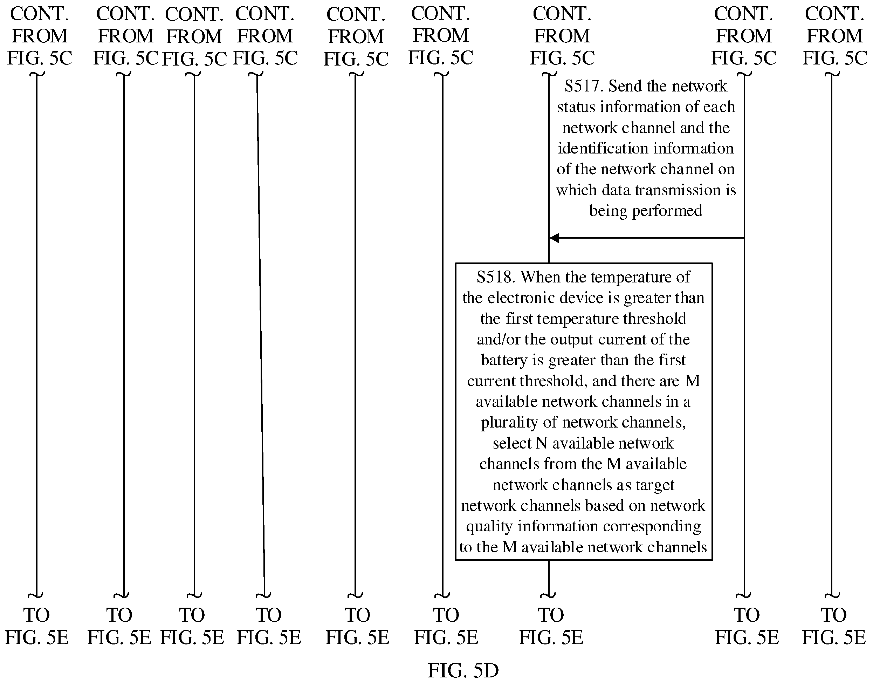

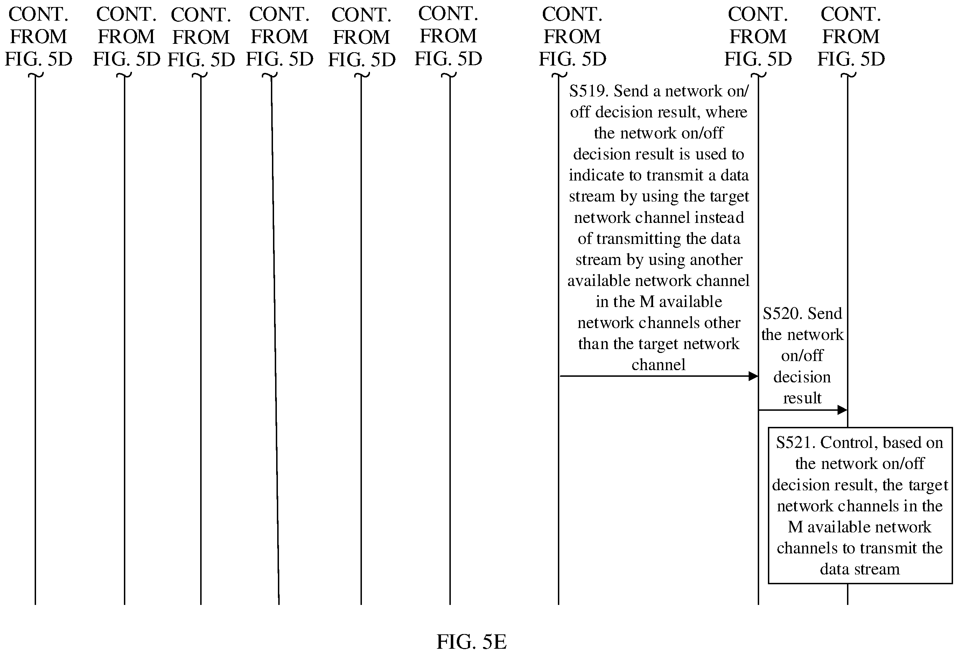

It may be understood that an implementation corresponding to FIG. 4 provides the entire process of network channel control between the cellular network and the WiFi network. To better understand this embodiment of this application, the following describes in detail, with reference to FIG. 5A to FIG. 5E, an interaction process between modules included in a network channel decision process provided in an embodiment of this application.

For example, FIG. 5A to FIG. 5E are a diagram of a procedure architecture in a network channel decision process according to an embodiment of this application. In an implementation corresponding to FIG. 5A to FIG. 5E, an electronic device may include: a temperature sensor driver, a coulometer driver, a target application, an application information receiving module, a graphics interface hook module, a frame rate detection module, a network channel decision-making module, a network channel control module, and a connectivity service. In addition, the electronic device may further include a phone manager, a WiFi manager, a graphics library, an image composer, a cellular network driver, a WiFi network driver, a mobile communication module, a wireless communication module, a temperature sensor, a coulometer, and the like that are not shown.

As shown in FIG. 5A to FIG. 5E, a network channel control method in the network channel decision process may specifically include the following steps.

S501. The temperature sensor driver obtains an actual temperature of a target component collected by the temperature sensor.

The temperature sensor is disposed near the target component in the electronic device. In a process of using the electronic device, the temperature sensor always collects the actual temperature of the target component, and the temperature sensor may report the collected actual temperature of the target component to the temperature sensor driver. For example, the target component may be a battery, and the actual temperature of the target component is an actual temperature of the battery.

S502. The temperature sensor driver determines a temperature of the electronic device based on the actual temperature.

In a possible implementation, after the temperature sensor driver obtains the actual temperature of the target component, the temperature sensor driver may convert the actual temperature of the target component into the temperature of the electronic device by using a preset temperature conversion algorithm. For example, the target component may be the battery, the temperature of the electronic device may be a fitting temperature of a backplane in the electronic device, and the fitting temperature of the backplane may also be referred to as a fitting housing temperature.

In another possible implementation, after the temperature sensor driver obtains the actual temperature of the target component, the temperature sensor driver may directly determine the actual temperature of the target component as the temperature of the electronic device. For example, the target component may be the battery, and the temperature of the electronic device is the actual temperature of the battery.

S503. The temperature sensor driver sends the temperature of the electronic device to the network channel decision-making module.

S504. The coulometer driver obtains an output current of the battery collected by the coulometer.

S505. The coulometer driver sends the output current of the battery to the network channel decision-making module.

In some embodiments, the coulometer may be disposed on a battery protection board of the electronic device. The coulometer may collect the output current of the battery, and report the collected output current of the battery to the coulometer driver. Then, the coulometer driver sends the output current of the battery to the network channel decision-making module.

S506. The target application sends a first network delay to the application information receiving module.

S507. The application information receiving module sends the first network delay to the network channel decision-making module.

It should be noted that for specific implementation processes of S506 and S507, refer to the foregoing specific implementation processes of S415 and S416. To avoid repetition, details are not described herein again.

S508. When the target application invokes the graphics library to draw and render an image, the graphics interface hook module obtains a drawing and rendering instruction from the graphics library.

S509. The graphics interface hook module determines a second network delay according to the drawing and rendering instruction.

To enable a display of the electronic device to display a user interface corresponding to the target application, the target application invokes the graphics library to draw and render the image. In a process in which the target application invokes the graphics library to draw and render the image, the graphics interface hook module may obtain the drawing and rendering instruction from the graphics library.

The drawing and rendering instruction is an instruction for drawing and rendering the user interface of the target application. The drawing and rendering instruction may include characteristic parameters corresponding to a plurality of UI controls, and each characteristic parameter includes a size and a location of the UI control.

The graphics interface hook module may determine the second network delay in the following manner: The graphics interface hook module determines, from the plurality of UI controls based on the characteristic parameters corresponding to the plurality of UI controls, a target UI control used to represent a network delay. The graphics interface hook module calculates pixel proportions of various colors included in the target UI control. The graphics interface hook module determines the second network delay based on a color with a largest pixel proportion.

Usually, the target UI control used to represent the network delay is drawn and rendered only after drawing and rendering of a main scene picture are completed. In a process of drawing and rendering the user interface of the target application, the electronic device first draws and renders the main scene picture, and performs a depth test (depth test) in a process of drawing the main scene picture. The depth test is used to control a front-rear occlusion relationship of layers in the main scene picture. Because the UI control is drawn and rendered on an outermost surface layer of the entire user interface, a depth test function is disabled after drawing and rendering of the main scene picture are completed. In addition, because the UI control is usually in a semitransparent state, when the UI control is drawn and rendered, a blend test (blend test) needs to be further enabled, to blend a color of the UI control with a color of each pixel in a layer below the UI control.

In this way, after the graphics interface hook module detects that conditions for disabling the depth test and enabling the blend test are both met, a remaining drawing and rendering instruction is a drawing and rendering instruction of the UI control. Because characteristic parameters of different UI controls are different, the graphics interface hook module may determine, from the plurality of UI controls based on the characteristic parameters in the drawing and rendering instruction of the UI control, the target UI control used to represent the network delay. Then, the graphics interface hook module collects statistics about a color of each pixel in the target UI control, and calculates the pixel proportions of the various colors included in the target UI control. Finally, the graphics interface hook module determines the second network delay based on the color with the largest pixel proportion.

In a possible implementation, different colors correspond to different second network delays, and each color and a delay range corresponding to each color are preset. When the color with the largest pixel proportion in the target UI control is green, it indicates that network performance is relatively good, and a delay range corresponding to the color is less than or equal to a range formed by the first delay threshold, that is, the second network delay may be less than or equal to the first delay threshold. When the color with the largest pixel proportion in the target UI control is yellow, it indicates that network performance is moderate, and a delay range corresponding to the color is greater than the range formed by the first delay threshold and less than a range formed by a second delay threshold, that is, the second network delay may be greater than the first delay threshold and less than the second delay threshold. When the color with the largest pixel proportion in the target UI control is red, it indicates that network performance is relatively poor, and a delay range corresponding to the color is greater than the range formed by the second delay threshold, that is, the second network delay is greater than the second delay threshold.

The first delay threshold is less than the second delay threshold. That is, when the color with the largest pixel proportion in the target UI control is green, it indicates that the second network delay is relatively low. When the color with the largest pixel proportion in the target UI control is red, it indicates that the second network delay is relatively high.

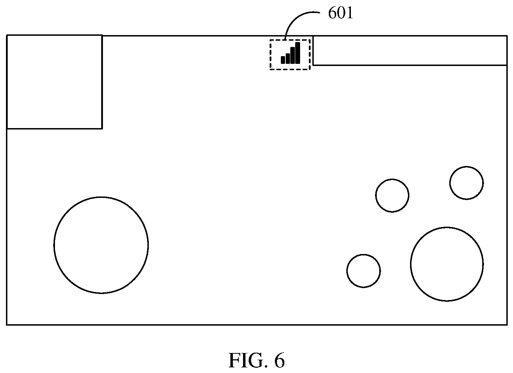

As shown in FIG. 6, in a battle interface of a game application running on the electronic device, a target UI control 601 used to represent a network delay is located at a location of an upper middle of the battle interface, and a size of the target UI control 601 used to represent the network delay may be 20×20 pixels.

An upper left corner is used as a coordinate origin, a horizontal direction is an X-axis direction, and a vertical direction is a Y-axis direction. When determining, from the plurality of UI controls, that a size of a UI control may be 20×20 pixels, a coordinate in the X-axis direction is close to a middle location of a screen, and a coordinate in the Y-axis direction is relatively small, the graphics interface hook module determines the UI control as the target UI control used to represent the network delay.

For example, the target UI control 601 used to represent the network delay may include four antenna lattices arranged from low to high. In addition, the target UI control 601 further includes another region located outside the four antenna lattices. It may be learned that the four antenna lattices occupy most of regions of the target UI control 601.

The second network delay may be reflected by filling the four antenna lattices of the target UI control 601 with different colors in the battle interface of the game application. In addition, because the four antenna lattices in the target UI control 601 occupy most of the regions of the target UI control 601, the second network delay may be determined by using a color with a largest pixel proportion.

Certainly, it may be understood that, the foregoing only provides a manner of determining the second network delay based on the pixel proportions of the various colors included in the target UI control. In this embodiment of this application, the second network delay may alternatively be determined in another manner.

S510. The graphics interface hook module sends the second network delay to the network channel decision-making module.

S511. The network channel decision-making module determines a target network delay based on the first network delay and/or the second network delay.

In some embodiments, after the network channel decision-making module obtains the first network delay sent by the application information receiving module and the second network delay sent by the graphics interface hook module, the network channel decision-making module may determine the target network delay based on the first network delay and/or the second network delay.

Specifically, the network channel decision-making module may perform weighted summation on the first network delay and the second network delay to calculate the target network delay. In this embodiment of this application, the target network delay may be calculated primarily by using the first network delay and secondarily by the second network delay. Therefore, the target network delay is calculated in a weighted summation manner, a weight of the first network delay is greater than a weight of the second network delay.

Alternatively, when the network channel decision-making module receives the first network delay sent by the application information receiving module, the network channel decision-making module may directly determine the first network delay as the target network delay. Alternatively, when the network channel decision-making module does not receive the first network delay sent by the application information receiving module, but receives the second network delay sent by the graphics interface hook module, the channel decision-making module may directly determine the second network delay as the target network delay.

S512. When the image composer composes a drawn and rendered image, the frame rate detection module obtains composition time at which each frame of image is composed.

S513. The frame rate detection module calculates a composition frame rate based on the composition time at which each frame of image is composed.

When the image composer composes the drawn and rendered image, the image composer invokes onPostComposition. Therefore, each time the image composer invokes onPostComposition, the frame rate detection module obtains, from the image composer, the composition time at which each frame of image is composed.

In a possible implementation, the frame rate detection module may calculate the composition frame rate in the following manner: The frame rate detection module collects statistics about a quantity of times of obtaining the composition time in a preset period; and the frame rate detection module determines a ratio of the quantity of times to the preset period as the composition frame rate.

For example, the preset period may be 1 second, and the frame rate detection module collects statistics about a quantity of times of obtaining the composition time in 1 second. When the quantity of times of obtaining the composition time in 1 second is 60, it is determined that the composition frame rate of the image is 60 fps.

In another possible implementation, the frame rate detection module may calculate the composition frame rate in the following manner: The frame rate detection module collects statistics about an average time interval between composition time of a plurality of most recent frames of images; and the frame rate detection module determines a reciprocal of the average time interval as the composition frame rate.

For example, the frame rate detection module calculates time intervals between composition time between every two adjacent frames in most recent 20 frames, and then averages the calculated time intervals to obtain an average time interval. Finally, a ratio of 1 to the average time interval is determined as the composition frame rate of the image. If the average time interval is 16.6 ms, the composition frame rate of the image is 60 fps.

In this embodiment of this application, the composition frame rate may be an average composition frame rate in preset duration (for example, 10 seconds) before a current moment.

S514. The frame rate detection module sends the composition frame rate to the network channel decision-making module.

S515. The network channel decision-making module selects a corresponding first temperature threshold and a first current threshold based on the target network delay and the composition frame rate.

In some embodiments, the target network delay and the composition frame rate may represent network performance in a running process of the target application, for example, whether a network in the running process of the target application is freezing. When the target network delay is relatively long, it represents that the network in the running process of the target application is relatively freezing. When the target network delay is relatively short, it represents that the network in the running process of the target application is relatively smooth. When the composition frame rate of the image is relatively large, displaying of a picture in the running process of the target application is relatively smooth. When the composition frame rate of the image is relatively small, displaying of the picture in the running process of the target application is relatively freezing. A smoothness degree of displaying the picture further reflects a smoothness degree of the network.

Therefore, when the target network delay and the composition frame rate change, the network channel decision-making module may select a different first temperature threshold and a different first current threshold, so that a condition for triggering a network channel on/off decision is different. In other words, when the target network delay and the composition frame rate change, a first temperature threshold referenced when the network channel on/off decision is triggered is different, and a first current threshold is also different.

When the target network delay is less than a delay threshold and the composition frame rate is greater than a frame rate threshold, the first temperature threshold is a first temperature value, and the first current threshold is a first current value. When the target network delay is greater than or equal to the delay threshold, and/or the composition frame rate is less than or equal to the frame rate threshold, the first temperature threshold is a second temperature value, and the first current threshold is a second current value. In addition, the first temperature value is less than the second temperature value, and the first current value is less than the second current value.

For example, the delay threshold may be 80 ms. The frame rate threshold may be 90% of a highest frame rate of the target application. That the highest frame rate of the target application is 60 fps is used as an example, and the frame rate threshold may be 54 fps.

When the target network delay is less than the delay threshold and the composition frame rate is greater than the frame rate threshold, it indicates that current network performance is relatively good. Therefore, a problem of high power consumption and heat generation of the electronic device can be processed in advance. In this case, a condition for triggering the network channel on/off decision is relatively low, so that a selected first temperature threshold and a selected first current threshold are relatively low. When the target network delay is greater than or equal to the delay threshold and/or the composition frame rate is less than or equal to the frame rate threshold, it indicates that current network performance is relatively poor. Therefore, an issue of network performance can be preferentially considered. In this case, a condition for triggering the network channel on/off decision is relatively high, so that a selected first temperature threshold and a selected first current threshold are relatively high.

For example, the delay threshold may be 80 ms, and the frame rate threshold may be 54 fps. When the target network delay is less than 80 ms and the composition frame rate is greater than 54 fps, a selected first temperature threshold may be 39°C, and a selected first current threshold may be 800 mA. When the target network delay is greater than or equal to 80 ms, and/or the composition frame rate is less than or equal to 54 fps, a selected first temperature threshold may be 43°C, and a selected first current threshold may be 1000 mA.

It may be understood that the foregoing manner of selecting the corresponding first temperature threshold and the corresponding first current threshold by comparing the target network delay with the delay threshold and comparing the composition frame rate with the frame rate threshold is only a possible implementation. Certainly, in this embodiment of this application, the corresponding first temperature threshold and the corresponding first current threshold may alternatively be determined based on the target network delay and the composition frame rate in another determining manner.

In another possible implementation, it is unnecessary for the network channel decision-making module to select the corresponding first temperature threshold and the corresponding first current threshold based on the target network delay and the composition frame rate. In this case, the first temperature threshold may be a fixed temperature value preset in the electronic device, or the first current threshold may be a fixed current value preset in the electronic device. When the target network delay and the composition frame rate change, the first temperature threshold is the same, and the first current threshold is also the same.

It may be understood that first temperature thresholds corresponding to different target applications may be different, and first current thresholds corresponding to the different target applications may also be different.

S516. The connectivity service sends network status information of each network channel and identification information of a network channel on which data transmission is being performed to the network channel control module.

In some embodiments, when a plurality of network channels in the electronic device include a cellular channel, the cellular network driver obtains network status information of the cellular channel from the mobile communication module. The cellular network driver sends the network status information of the cellular channel to the connectivity service by using the phone manager.

When the plurality of network channels in the electronic device include a WiFi channel, the WiFi network driver obtains network status information of the WiFi channel from the wireless communication module. The WiFi network driver sends the network status information of the WiFi channel to the connectivity service by using the WiFi manager.

It should be noted that for specific implementation processes in which the connectivity service obtains the network status information of the cellular channel and the network status information of the WiFi channel, refer to the specific implementation processes the foregoing S402 to S407. To avoid repetition, details are not described herein again.

In addition, in the process of using the electronic device, the phone manager may further monitor, by using the cellular network driver, whether data transmission is being performed on the cellular channel. When the network channel on which data transmission is being performed includes the cellular channel, the phone manager sends first data monitoring information to the connectivity service, and the first data monitoring information may include identification information of a cellular channel on which data transmission is being performed, and the like. The WiFi manager may further monitor, by using the WiFi network driver, whether data transmission is being performed on the WiFi channel. When the network channel on which data transmission is being performed includes the WiFi channel, the WiFi manager sends second data monitoring information to the connectivity service, and the second data monitoring information may include identification information of a WiFi channel on which data transmission is being performed, and the like.

After obtaining the network status information of each network channel in the plurality of network channels and the identification information of the network channel on which data transmission is being performed, the connectivity service sends the network status information of each network channel and the identification information of the network channel on which data transmission is being performed to the network channel control module. The network status information includes an enabling status of the network channel and network quality information obtained when the enabling status is an available state. The enabling status includes an available state or an unavailable state. A network channel whose enabling status is the available state is an available network channel.

S517. The network channel control module sends the network status information of each network channel and the identification information of the network channel on which data transmission is being performed to the network channel decision-making module.

It should be noted that an execution process of sending the temperature of the electronic device to the network channel decision-making module in the foregoing S501 to S503, an execution process of sending the output current of the battery to the network channel decision-making module in the foregoing S504 and S505, an execution process of sending the first network delay to the network channel decision-making module in the foregoing S506 and S507, an execution process of sending the second network delay to the network channel decision-making module in the foregoing S508 to S510, an execution process of sending the composition frame rate to the network channel decision-making module in the foregoing S512 to S514, and an execution process of sending the network status information of each network channel and the identification information of the network channel on which data transmission is being performed to the network channel decision-making module in the foregoing S516 and S517 have no fixed sequence. Corresponding operations may be executed, for example, executed in parallel, based on an actual situation.

S518. When the temperature of the electronic device is greater than the first temperature threshold and/or the output current of the battery is greater than the first current threshold, and there are M available network channels in the plurality of network channels, the network channel decision-making module selects N available network channels from the M available network channels as target network channels based on network quality information corresponding to the M available network channels.

After the network channel decision-making module receives the temperature of the electronic device, the output current of the battery, the network status information of each network channel, and the identification information of the network channel on which data transmission is being performed, the network channel decision-making module compares the temperature of the electronic device with the first temperature threshold, and compares the output current of the battery with the first current threshold.

It should be understood that the temperature of the electronic device compared with the first temperature threshold may be an average temperature of the electronic device in first preset duration (for example, 10s) before a current moment. The output current compared with the first current threshold may be an average output current in second preset duration (for example, 10s) before the current moment.

After the network channel decision-making module receives the temperature of the electronic device, the output current of the battery, the network status information of each network channel, and the identification information of the network channel on which data transmission is being performed, the network channel decision-making module determines, from the plurality of network channels based on an enabling status of each network channel and the identification information of the network channel on which data transmission is being performed, an available network channel on which data transmission is being performed and whose enabling status is the available state. The network channel decision-making module extracts network quality information corresponding to the available network channel from the network status information of each network channel.

Specifically, the network channel decision-making module takes an intersection of a network channel whose enabling status is the available state and the network channel on which data transmission is being performed, that is, a network channel on which data transmission is being performed and whose enabling status is the available state is used as the available network channel.

Network channels whose enabling status is the available state indicates that the target application may use these network channels to transmit a data stream. In an actual use process, the target application transmits the data stream of the target application by using a part or all of the network channels whose enabling status is the available state. However, it is actually unable to accurately determine which network channels are used to transmit the data stream of the target application.

The network channel on which data transmission is being performed indicates a network channel currently used when the electronic device is performing data transmission. In an actual use process, the network channel on which data transmission is being performed may transmit the data stream of the target application, or another data stream not from the target application.

Therefore, in the plurality of network channels of the electronic device, the available network channel whose data transmission is being performed and whose enabling status is the available state may possibly be a network channel used to transmit the data stream of the target application.

When the temperature of the electronic device is greater than the first temperature threshold and/or the output current of the battery is greater than the first current threshold, and there are the M available network channels in the plurality of network channels, the network channel on/off decision is triggered. In this case, the network channel decision-making module may extract the network quality information corresponding to the M available network channels from the network status information of each network channel, and then
select the N available network channels from the M available network channels as the target network channels based on the network quality information corresponding to the M available network channels, where M is an integer greater than 1, N is an integer greater than or equal to 1, and N is less than M.

In a possible implementation, the network channel decision-making module may select the N available network channels from the M available network channels as the target network channels in the following manner: The network channel decision-making module evaluates network quality of the M available network channels based on the network quality information corresponding to the M available network channels. When a difference between network quality of at least two of the M available network channels is greater than a network quality threshold, the network channel decision-making module selects first ranked N available network channels as the target network channels in descending order of the network quality of the M available network channels. When a difference between network quality of any two of the M available network channels is less than or equal to the network quality threshold, the network channel decision-making module selects first ranked N available network channels as the target network channels in descending order of usage priorities of the M available network channels.

In some embodiments, the network quality information includes at least one of signal strength, bandwidth, and a signal-to-noise ratio. If the network quality information includes the signal strength, when signal strength of an available network channel is greater, network quality of the available network channel is higher. When the signal strength of the available network channel is less, the network quality of the available network channel is poorer. If the network quality information includes the bandwidth, when bandwidth of an available network channel is larger, network quality of the available network channel is higher. When the bandwidth of the available network channel is smaller, the network quality of the available network channel is poorer. If the network quality information includes the signal-to-noise ratio, when a signal-to-noise ratio of an available network channel is larger, network quality of the available network channel is higher. When the signal-to-noise ratio of the available network channel is smaller, the network quality of the available network channel is poorer.

The network quality of the available network channels may be evaluated by using a specific value. For example, when the network quality information includes the signal strength, the bandwidth, and the signal-to-noise ratio, the network quality of the available network channel may be a result of a weighted summation of the signal strength, the bandwidth, and the signal-to-noise ratio of the available network channel.

Weights of the signal strength, the bandwidth, and the signal-to-noise ratio may be set based on an actual situation. The weights of the signal strength, the bandwidth, and the signal-to-noise ratio may or may not be equal.

Certainly, the network quality information may alternatively include any one of the signal strength, the bandwidth, and the signal-to-noise ratio. In this case, the network channel decision-making module may directly measure the network quality of the available network channel by using the network quality information of the available network channel. The network quality information may alternatively include any two of the signal strength, the bandwidth, and the signal-to-noise ratio. In this case, the network quality of the available network channel may be a result of a weighted summation of any two items in the foregoing network quality information. For example, the network quality information includes the signal strength and the bandwidth, and network quality of an available network channel may be a result of a weighted summation of signal strength and bandwidth of the available network channel.

After the network quality of each available network channel is obtained by measuring in the foregoing manner, the network channel decision-making module may compare the network quality of the any two of the M available network channels.

When the difference between the network quality of the at least two of the M available network channels is greater than the network quality threshold, that is, when the network channel decision-making module determines that there is a relatively large difference between network quality of at least a part of the available network channels, the network channel decision-making module selects the first ranked N available network channels as the target network channels in descending order of the network quality of the M available network channels. In this case, network quality of the target network channel is higher than network quality of another available network channel in the M available network channels other than the target network channel.

When the difference between the network quality of the any two of the M available network channels is less than or equal to the network quality threshold, that is, when the network channel decision-making module determines that there is no obvious difference between network quality of the available network channels, the network channel decision-making module selects the first ranked N available network channels as the target network channels in descending order of the usage priorities of the M available network channels. In this case, a usage priority of the target network channel is higher than a usage priority of another available network channel in the M available network channels other than the target network channel. The usage priority is used to indicate a use order of the available network channels when being used.

For example, that M is equal to 2, the two available network channels are respectively a first network channel and a second network channel, the first network channel is a cellular channel, and the second network channel is a WiFi channel is used as an example, and the network channel decision-making module may select the target network channel based on a decision policy shown in the following Table 1.

**Table 1**

| Temperature of an electronic device | Output current of a battery | Network quality of a cellular channel | Network quality of a WiFi channel | Decision result |
|---|---|---|---|---|
| High | High | Good | Good | Disable the cellular channel |
| High | High | Good | Poor | Disable the WiFi channel |
| Low | High | Good | Good | Disable the cellular channel |
| Low | Low | Good | Good | Unchanged |
| High | Low | Good | Good | Disable the cellular channel |
| High | High | Poor | Poor | Disable the cellular channel |

In Table 1, when the temperature of the electronic device is "high", it indicates that the temperature of the electronic device is greater than the first temperature threshold. When the temperature of the electronic device is "low", it indicates that the temperature of the electronic device is less than or equal to the first temperature threshold. When the output current of the battery is "high", it indicates that the output current of the battery is greater than the first current threshold. When the output current of the battery is "low", it indicates that the output current of the battery is less than or equal to the first current threshold.

When the network quality of the cellular channel and the network quality of the WiFi channel are both "good", it indicates that the network quality of the cellular channel and the network quality of the WiFi channel are relatively good, and there is no obvious difference between the network quality of the cellular channel and the network quality of the WiFi channel, that is, a difference between the network quality of the cellular channel and the network quality of the WiFi channel is less than or equal to the network quality threshold. When the network quality of the cellular channel and the network quality of the WiFi channel are both "poor", it indicates that the network quality of the cellular channel and the network quality of the WiFi channel are relatively poor, and there is no obvious difference between the network quality of the cellular channel and the network quality of the WiFi channel, that is, a difference between the network quality of the cellular channel and the network quality of the WiFi channel is less than or equal to the network quality threshold. When the network quality of the cellular channel is "good" and the network quality of the WiFi channel is "poor", it indicates that the network quality of the cellular channel is higher than the network quality of the WiFi channel, and there is a relatively large difference between the network quality of the cellular channel and the network quality of the WiFi channel, that is, a difference between the network quality of the cellular channel and the network quality of the WiFi channel is greater than the network quality threshold.

"Unchanged" in Table 1 indicates that current enabling statuses of the cellular channel and the WiFi channel remain unchanged.

Therefore, with reference to Table 1, it may be learned that, in an example in which the M available network channels include one cellular channel and one WiFi channel, when the temperature of the electronic device is greater than the first temperature threshold and/or the output current of the battery is greater than the first current threshold, when there is the relatively large difference between the network quality of the cellular channel and the network quality of the WiFi channel, an available network channel with relatively poor network quality is preferentially disabled. In this case, the target network channel is an available network channel with relatively good network quality. When there is no obvious difference between the network quality of the cellular channel and the network quality of the WiFi channel, the cellular channel with a relatively low priority is preferentially disabled. In this case, the target network channel is the WiFi channel with a relatively high priority.

Certainly, a quantity M of available network channels in this embodiment of this application may alternatively be an integer greater than 2. In this case, a quantity N of selected target network channels may be an integer greater than 0 and less than M.

For example, N may be equal to M-1. To be specific, an available network channel whose network quality is the poorest in the M available network channels is disabled, or an available network channel whose usage priority is the lowest in the M available network channels is disabled.

It may be understood that disabling an available network channel in this embodiment of this application means not using the available network channel to transmit the data stream of the target application.

S519. The network channel decision-making module sends a network on/off decision result to the network channel control module, where the network on/off decision result is used to indicate to transmit the data stream by using the target network channel instead of transmitting the data stream by using the another available network channel in the M available network channels other than the target network channel.

S520. The network channel control module sends the network on/off decision result to the connectivity service.

S521. The connectivity service controls, based on the network on/off decision result, the target network channels in the M available network channels to transmit the data stream.

In some embodiments, when the another available network channel in the M available network channels other than the target network channel includes a cellular channel, the connectivity service sends a first control instruction to the cellular network driver by using the phone manager; and the cellular network driver controls, according to the first control instruction, the mobile communication module not to transmit the data stream of the target application.

When the network on/off decision result is used to indicate not to transmit the data stream of the target application by using the cellular channel, the connectivity service may send the first control instruction to the phone manager, the phone manager then sends the first control instruction to the cellular network driver, and the cellular network driver controls, according to the first control instruction, the mobile communication module not to transmit the data stream of the target application. In this case, after the target application sends allocated data packets to the cellular network driver, and then the cellular network driver sends the data packets to the mobile communication module, the mobile communication module may discard these data packet.

In some other embodiments, when the another available network channel in the M available network channels other than the target network channel includes the WiFi channel, the connectivity service sends a second control instruction to the WiFi network driver by using the WiFi manager; and the WiFi network driver controls, according to the second control instruction, the wireless communication module not to transmit the data stream of the target application.

When the network on/off decision result is used to instruct not to transmit the data stream of the target application by using the WiFi channel, the connectivity service may send the second control instruction to the WiFi manager, the WiFi manager then sends the second control instruction to the WiFi network driver, and the WiFi network driver controls, according to the second control instruction, the wireless communication module not to transmit the data stream of the target application. In this case, after the target application sends allocated data packets to the WiFi network driver, and then the WiFi network driver sends the data packets to the wireless communication module, the wireless communication module may discard these data packet.

Therefore, when the temperature of the electronic device is greater than the first temperature threshold and/or the output current is greater than the first current threshold, and there are the M available network channels in the plurality of network channels, the network channel on/off decision is triggered. The N available network channels are selected as the target network channels based on the network quality information corresponding to the M available network channels, to transmit the data stream of the target application, instead of transmitting the data stream of the target application by using the another available network channel in the M available network channels other than the target network channel, thereby reducing power consumption of the electronic device.

In this embodiment of this application, after the connectivity service controls, based on the network on/off decision result, the another available network channel in the M available network channels other than the target network channel not to transmit the data stream of the target application, to determine network performance of transmitting the data stream of the target application by using only the target network channel, the electronic device may further obtain a latest temperature of the electronic device, a latest output current of the battery, a latest target network delay, and a latest composition frame rate again, to re-determine a target network channel used to transmit the data stream of the target application.

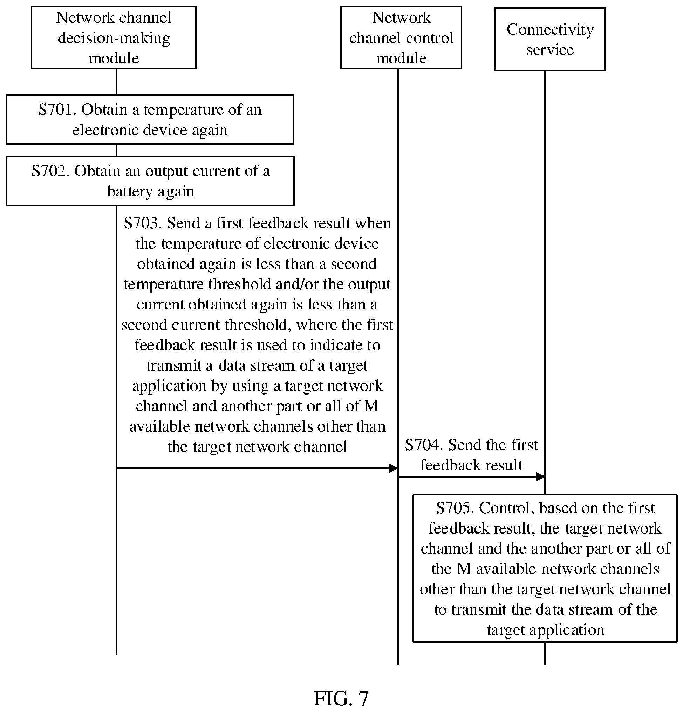

For example, FIG. 7 is a diagram of a procedure architecture in a feedback process after a network channel decision is made according to an embodiment of this application. In an implementation corresponding to FIG. 7, an electronic device may include a network channel decision-making module, a network channel control module, and a connectivity service. In addition, the electronic device may further include a temperature sensor driver, a coulometer driver, a phone manager, a WiFi manager, a cellular network driver, a WiFi network driver, a mobile communication module, a wireless communication module, a temperature sensor, a coulometer, and the like that are not shown.

As shown in FIG. 7, after the network channel control method corresponding to FIG. 5A to FIG. 5E is performed, that is, after the foregoing S521, a network channel control method in the feedback process may specifically include the following steps.

S701. The network channel decision-making module obtains a temperature of the electronic device again.

It should be noted that by using specific implementation processes of the foregoing S501 to S503, the network channel decision-making module is enabled to obtain the temperature of the electronic device again. Details are not described herein again.

S702. The network channel decision-making module obtains an output current of a battery again.

It should be noted that by using specific implementation processes of the foregoing S504 to S505, the network channel decision-making module is enabled to obtain the output current of the battery again. Details are not described herein again.

Therefore, by using the foregoing S701 and S702, the network channel decision-making module can obtain the temperature of the electronic device and the output current of the battery in the electronic device again.

S703. The network channel decision-making module sends a first feedback result to the network channel control module when the temperature of electronic device obtained again is less than a second temperature threshold and/or the output current obtained again is less than a second current threshold, where the first feedback result is used to indicate to transmit a data stream of a target application by using a target network channel and another part or all of M available network channels other than the target network channel.

After the network channel decision-making module obtains the temperature (namely, a temperature obtained after the data stream is transmitted by using only the target network channel) of the electronic device again and obtains the output current (namely, an output current obtained after the data stream is transmitted by using only the target network channel) again, when it is determined that the temperature of the electronic device obtained again is less than the second temperature threshold and/or the output current obtained again is less than the second current threshold, it indicates that the temperature of the electronic device decreases and/or power consumption of the electronic device decreases. In this case, the network channel decision-making module sends the first feedback result to the network channel control module, to restore a part or all of disabled available network channels in the M available network channels, to transmit the data stream of the target application by using the target network channel and the restored available network channel.

The second temperature threshold is less than a first temperature threshold, and the second current threshold is less than a first current threshold. For example, the first temperature threshold may be 43°C, and the first current threshold may be 1000 mA. In this case, the second temperature threshold may be 39°C, and the second current threshold may be 800 mA.

It may be understood that second temperature thresholds corresponding to different target applications may be different, and second current thresholds corresponding to the different target applications may also be different.

S704. The network channel control module sends the first feedback result to the connectivity service.

S705. The connectivity service controls, based on the first feedback result, the target network channel and the another part or all of the M available network channels other than the target network channel to transmit the data stream of the target application.

Specifically, the first feedback result may be to restore a cellular channel. For a manner of restoring the cellular channel, refer to the following detailed description.

In some embodiments, when a to-be-restored available network channel in the M available network channels includes the cellular channel, that is, the first feedback result is used to indicate to restore the cellular channel, the connectivity service may send a third control instruction to the phone manager, and then the phone manager sends the third control instruction to the cellular network driver. The cellular network driver controls, according to the third control instruction, the mobile communication module to continue to transmit the data stream of the target application. Therefore, in a subsequent process, after the target application sends an allocated data packet to the cellular network driver, and then the cellular network driver sends the data packet to the mobile communication module, the mobile communication module may send the data packet to a corresponding server.

Specifically, the first feedback result may be to restore a WiFi channel. For a manner of restoring the WiFi channel, refer to the following detailed description.

In some other embodiments, when a to-be-restored available network channel in the M available network channels includes the WiFi channel, that is, the first feedback result is used to indicate to restore the WiFi channel, the connectivity service may send a fourth control instruction to the WiFi manager, and then the WiFi manager sends the fourth control instruction to the WiFi network driver. The WiFi network driver controls, according to the fourth control instruction, the wireless communication module to continue to transmit the data stream of the target application. Therefore, in a subsequent process, after the target application sends an allocated data packet to the WiFi network driver, and then the WiFi network driver sends the data packet to the wireless communication module, the wireless communication module may send the data packet to a corresponding server.

In this way, when the temperature of the electronic device obtained after the data stream is transmitted by using only the target network channel is less than the second temperature threshold, and/or the output current obtained after the data stream is transmitted by using only the target network channel is less than the second current threshold, the electronic device may restore the part or all of the disabled network channels in the M available network channels, to transmit the data stream by using the target network channel and the restored available network channel, thereby improving network performance in a running process of the target application.

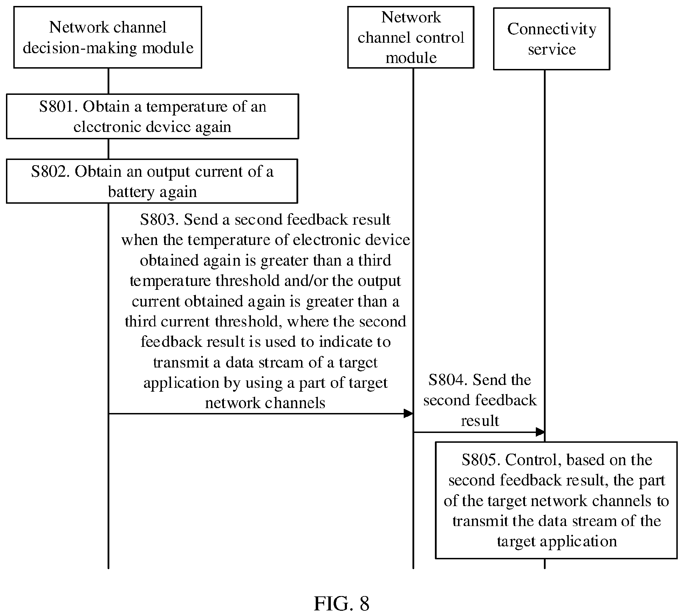

The implementation corresponding to FIG. 7 aims at a feedback manner when the temperature of the electronic device and the output current of the battery decrease after only the target network channel is used to transmit the data stream of the target application. Certainly, in some other scenarios, after only the target network channel is used to transmit the data stream of the target application, the temperature of the electronic device and the output current of the battery may continue to rise. For a feedback manner in this case, refer to the following description corresponding to FIG. 8.

For example, FIG. 8 is a diagram of a procedure architecture in a feedback process after another network channel decision is made according to an embodiment of this application. In an implementation corresponding to FIG. 8, an electronic device may include a network channel decision-making module, a network channel control module, and a connectivity service. In addition, the electronic device may further include a temperature sensor driver, a coulometer driver, a phone manager, a WiFi manager, a cellular network driver, a WiFi network driver, a mobile communication module, a wireless communication module, a temperature sensor, a coulometer, and the like that are not shown. In the implementation corresponding to FIG. 8, N is an integer greater than 1, that is, when a network channel decision is made, a quantity of selected target network channels is greater than 1.

As shown in FIG. 8, after the network channel control method corresponding to FIG. 5A to FIG. 5E is performed, that is, after the foregoing S521, a network channel control method in the feedback process may specifically include the following steps.

S801. The network channel decision-making module obtains a temperature of the electronic device again.

S802. The network channel decision-making module obtains an output current of a battery again.

Therefore, by using the foregoing S801 and S802, the network channel decision-making module can obtain the temperature of the electronic device and the output current of the battery in the electronic device again.

S803. The network channel decision-making module sends a second feedback result to the network channel control module when the temperature of electronic device obtained again is greater than a third temperature threshold and/or the output current obtained again is greater than a third current threshold, where the second feedback result is used to indicate to transmit a data stream of a target application by using a part of the target network channels.

After the network channel decision-making module obtains the temperature of the electronic device again and obtains the output current again, when it is determined that the temperature of the electronic device obtained again is greater than the third temperature threshold and/or the output current obtained again is greater than the third current threshold, it indicates that after only the target network channels are used to transmit the data stream of the target application, the temperature of the electronic device still increases and/or power consumption of the electronic device continues to increase. In this case, the network channel decision-making module sends the second feedback result to the network channel control module, to continue to transmit the data stream of the target application by using the part of the target network channels, and another part of the target network channels no longer continues to transmit the data stream of the target application.

The third temperature threshold is greater than a first temperature threshold, and the third current threshold is greater than a first current threshold. For example, the first temperature threshold may be 43°C, and the first current threshold may be 1000 mA. In this case, the third temperature threshold may be 46°C, and the third current threshold may be 1200 mA.

It may be understood that third temperature thresholds corresponding to different target applications may be different, and third current thresholds corresponding to the different target applications may also be different.

In this embodiment of this application, network quality of the target network channel used to transmit the data stream is higher than network quality of the target network channel not used to transmit the data stream. That is, when there is a relatively large difference between network quality of the target network channels, a target network channel with relatively good network quality is used to continue to transmit the data stream of the target application, and a target network channel with relatively poor network quality in the target network channels is not used to continue to transmit the data stream of the target application.

For example, M available network channels include a WiFi channel, a first cellular channel, and a second cellular channel. Signal quality of the WiFi channel is higher than signal quality of the first cellular channel, and the signal quality of the first cellular channel is higher than signal quality of the second cellular channel. Therefore, in an execution process of the foregoing S521, the second cellular channel is controlled not to transmit the data stream of the target application. In this case, the target network channels include the WiFi channel and the first cellular channel, that is, the data stream of the target application is transmitted by using the WiFi channel and the first cellular channel. When the temperature of the electronic device obtained after the data stream is transmitted by using only the target network channels is greater than the third temperature threshold, and/or the output current obtained after the data stream is transmitted by using only the target network channels is greater than the third current threshold, the first cellular channel may continue to be controlled to no longer transmit the data stream of the target application, and the data stream of the target application is transmitted by using only the WiFi channel.

Alternatively, a priority of the target network channel used to transmit the data stream is higher than a priority of the target network channel not used to transmit the data stream. That is, when there is no obvious difference between network quality of the target network channels, a target network channel with a relatively high priority is used to continue to transmit the data stream of the target application, and a target network channel with a relatively low priority is not used to continue to transmit the data stream of the target application.

S804. The network channel control module sends the second feedback result to the connectivity service.

S805. The connectivity service controls, based on the second feedback result, the part of the target network channels to transmit the data stream of the target application.

In this way, when the temperature of the electronic device obtained after the data stream is transmitted by using only the target network channels is greater than the third temperature threshold, and/or the output current obtained after the data stream is transmitted by using only the target network channels is greater than the third current threshold, the electronic device can continue to transmit the data stream of the target application by using the part of the target network channels, and the another part of the target network channels no longer transmits the data stream of the target application, thereby further reducing power consumption of the electronic device.

With reference to FIG. 7 and FIG. 8, it may be learned that when the temperature of the electronic device obtained again and the output current obtained again meet a first preset condition, the electronic device re-determines the target network channel used to transmit the data stream.

In the implementation corresponding to FIG. 7, the first preset condition may include: The temperature of the electronic device obtained again is less than the second temperature threshold, and/or the output current obtained again is less than the second current threshold. That the electronic device re-determines target network channels used to transmit the data stream actually is: The electronic device transmits the data stream by using the target network channel and the another part or all of the M available network channels other than the target network channel.

In the implementation corresponding to FIG. 8, the first preset condition may include: The temperature of the electronic device obtained again is greater than the third temperature threshold, and/or the output current obtained again is greater than the third current threshold. That the electronic device re-determines target network channels used to transmit the data stream actually is: The electronic device transmits the data stream by using the part of the target network channels.

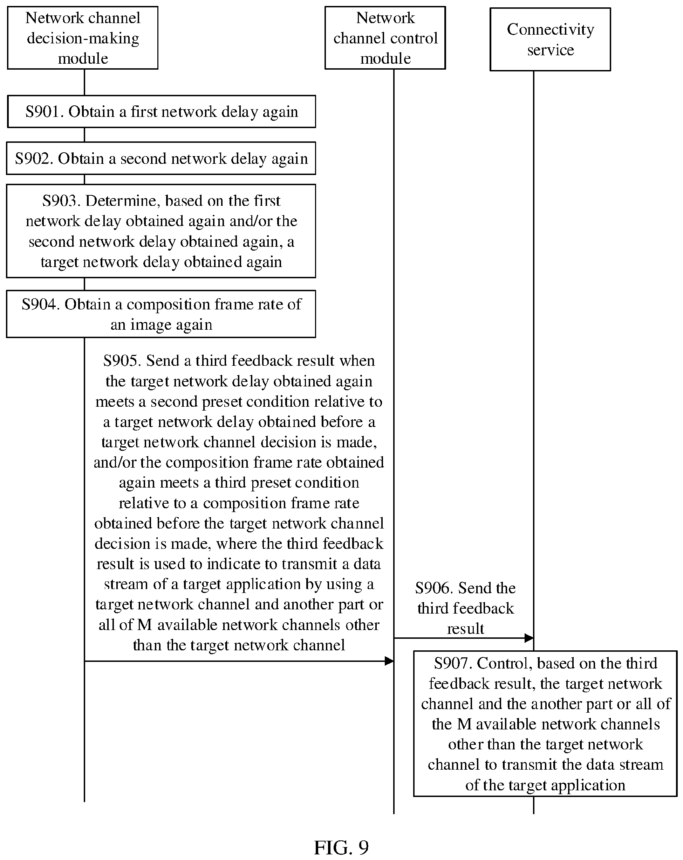

For example, FIG. 9 is a diagram of a procedure architecture in a feedback process after still another network channel decision is made according to an embodiment of this application. In an implementation corresponding to FIG. 9, an electronic device may include a network channel decision-making module, a network channel control module, and a connectivity service. In addition, the electronic device may further include a target application, an application information receiving module, a graphics interface hook module, a frame rate detection module, a phone manager, a WiFi manager, a cellular network driver, a WiFi network driver, a mobile communication module, a wireless communication module, and the like that are not shown.

As shown in FIG. 9, after the network channel control method corresponding to FIG. 5A to FIG. 5E is performed, that is, after the foregoing S521, a network channel control method in the feedback process may specifically include the following steps.

S901. The network channel decision-making module obtains a first network delay again.

It should be noted that by using specific implementation processes of the foregoing S506 and S507, the network channel decision-making module is enabled to obtain the first network delay again. Details are not described herein again.

S902. The network channel decision-making module obtains a second network delay again.

It should be noted that by using specific implementation processes of the foregoing S508 to S510, the network channel decision-making module is enabled to obtain the second network delay again. Details are not described herein again.

S903. The network channel decision-making module determines, based on the first network delay obtained again and/or the second network delay obtained again, a target network delay obtained again.

It should be noted that, the target network delay obtained again may be determined with reference to a specific implementation of the foregoing S511. To avoid repetition, details are not described herein again.

S904. The network channel decision-making module obtains a composition frame rate of an image again.

It should be noted that by using specific implementation processes of the foregoing S512 to S514, the network channel decision-making module is enabled to obtain the composition frame rate of the image again.

Therefore, by using the foregoing S901 to S904, the network channel decision-making module can obtain the target network delay and the composition frame rate of the image again.

S905. The network channel decision-making module sends a third feedback result to the network channel control module when the target network delay obtained again meets a second preset condition relative to a target network delay obtained before a target network channel decision is made, and/or the composition frame rate obtained again meets a third preset condition relative to a composition frame rate obtained before the target network channel decision is made, where the third feedback result is used to indicate to transmit a data stream of the target application by using a target network channel and another part or all of M available network channels other than the target network channel.

The second preset condition includes: A difference between the target network delay obtained again and the target network delay obtained before the target network channel decision is made is greater than a product of a first preset percentage and the target network delay obtained before the target network channel decision is made; and the first preset percentage is greater than 0 and less than 1. The third preset condition includes: A difference between the composition frame rate obtained before the target network channel decision is made and the composition frame rate obtained again is greater than a product of a second preset percentage and the composition frame rate obtained before the target network channel decision is made; and the second preset percentage is greater than 0 and less than 1.

For example, the first preset percentage may be 10%, and the second preset percentage may also be 10%. The first preset percentage and the second preset percentage may be set based on an actual situation. This is not limited in this embodiment of this application.

To be specific, when the target network delay obtained after the data stream is transmitted by using only the target network channel increases relative to the target network delay obtained before the target network channel decision is made (before the data stream is transmitted by using only the target network channel), and/or the composition frame rate obtained after the data stream is transmitted by using only the target network channel decreases relative to the composition frame rate obtained before the target network channel decision is made, it indicates that network performance is affected after a part of available network channels is disabled. Therefore, to improve network performance, a part or all of the disabled available network channels can be restored, to transmit the data stream of the target application by using the target network channel and the restored available network channel.

S906. The network channel control module sends the third feedback result to the connectivity service.

S907. The connectivity service controls, based on the third feedback result, the target network channel and the another part or all of the M available network channels other than the target network channel to transmit the data stream of the target application.

In this way, when the target network delay obtained after the data stream is transmitted by using only the target network channel meets the second preset condition relative to the target network delay obtained before the target network channel decision is made, and/or the composition frame rate obtained after the data stream is transmitted by using only the target network channel meets the third preset condition relative to the composition frame rate obtained before the target network channel decision is made, the electronic device can restore the part or all of the disabled available network channels in the M available network channels, to transmit the data stream of the target application by using the target network channel and the restored available network channel, thereby improving network performance in a running process of the target application.

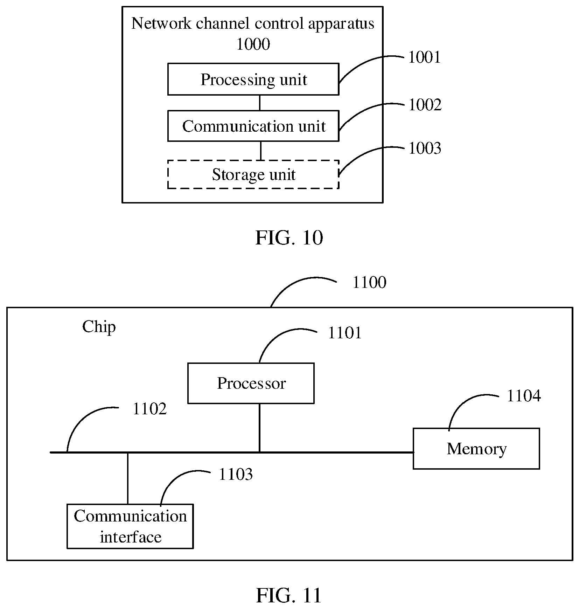

The foregoing describes the network channel control method provided in embodiments of this application with reference to FIG. 4 to FIG. 9. The following describes an apparatus for performing the foregoing method in embodiments of this application. As shown in FIG. 10, FIG. 10 is a schematic diagram of a structure of a network channel control apparatus according to an embodiment of this application. The network channel control apparatus may be an electronic device in the embodiments of this application or a chip or a chip system in the electronic device.

As shown in FIG. 10, the network channel control apparatus 1000 includes a processing unit 1001 and a communication unit 1002. The processing unit 1001 is configured to support the network channel control apparatus 1000 in performing the foregoing processing steps. The communication unit 1002 is configured to support the network channel control apparatus 1000 in performing the foregoing steps of data sending and data receiving. The communication unit 1002 may be an input or output interface, a pin, a circuit, or the like.

The processing unit 1001 is configured to obtain a temperature of the electronic device and an output current of a battery in the electronic device. In a running process of a target application, when the temperature is greater than a first temperature threshold and/or the output current is greater than a first current threshold, and there are M available network channels in a plurality of network channels, the processing unit 1001 is configured to transmit a data stream of the target application by using target network channels in the M available network channels. The available network channel is a network channel on which data transmission is being performed and that is in an available state for the target application, the target network channels are N of the M available network channels, M is an integer greater than 1, N is an integer greater than or equal to 1, and N is less than M.

In a possible implementation, the network channel control apparatus 1000 further includes a storage unit 1003. The storage unit 1003 and the processing unit 1001 are connected to each other by using a line. The storage unit 1003 may include one or more memories, and the memory may be a component configured to store a program or data in one or more devices or circuits. The storage unit 1003 may exist independently, and is connected to the processing unit 1001 by using a communication bus. Alternatively, the storage unit 1003 may be integrated into the processing unit 1001.

The storage unit 1003 may store computer-executable instructions of the method in the electronic device, so that the processing unit 1001 performs the method in the foregoing embodiments. The storage unit 1003 may be a register, a cache, a random access memory (random access memory, RAM), or the like, and the storage unit 1003 may be integrated into the processing unit 1001. The storage unit 1003 may be a read-only memory (read-only memory, ROM) or another type of static storage device that may store static information and instructions. The storage unit 1003 may be independent of the processing unit 1001.

FIG. 11 is a schematic diagram of a structure of a chip according to an embodiment of this application. As shown in FIG. 11, a chip 1100 includes one or more than two (including two) processors 1101, a communication line 1102, and a communication interface 1103. Optionally, the chip 1100 further includes a memory 1104.

In some implementations, the memory 1104 stores the following elements: an executable module or a data structure, or a subset thereof, or a superset thereof.

The method described in the embodiments of this application may be applied to the processor 1101 or implemented by the processor 1101. The processor 1101 may be an integrated circuit chip having a capability of processing a signal. During an implementation, the steps of the method may be performed by using an integrated logic circuit of hardware in the processor 1101 or by using instructions in a form of software. The processor 1101 may be a general-purpose processor (for example, a microprocessor or a conventional processor), a digital signal processor, an application specific integrated circuit (application specific integrated circuit, ASIC), a field-programmable gate array (field-programmable gate array, FPGA) or another programmable logic device, a discrete gate, or a transistor logic device or a discrete hardware component. The processor 1101 may implement or perform the methods, steps, and logical block diagrams disclosed in the embodiments of this application.

The steps of the method disclosed with reference to the embodiments of this application may be directly performed by a hardware decoding processor, or performed by a combination of hardware in a decoding processor and a software module. The software module may be located in a mature storage medium in the art, such as a random access memory, a read-only memory, a programmable read-only memory, or an electrically erasable programmable read-only memory (electrically erasable programmable read only memory, EEPROM). The storage medium is located in the memory 1104, and the processor 1101 reads information in the memory 1104 and completes the steps of the foregoing method in combination with hardware in the processor.

The processor 1101, the memory 1104, and the communication interface 1103 may communicate with each other by using the communication line 1102.

In the foregoing embodiments, instructions stored in the memory for execution by the processor may be implemented in a form of a computer program product. The computer program product may be written in the memory in advance, or may be downloaded and installed in the memory in a form of software.

An embodiment of this application further provides a computer program product, including one or more computer instructions. When the computer program instructions are loaded and executed on a computer, all or some of the procedures or functions according to the embodiments of this application are generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (digital subscriber line, DSL)) manner or a wireless (for example, infrared, radio, or microwave) manner. The computer-readable storage medium may be any available medium on which the computer can perform storage, or a data storage device such as a server or a data center integrating one or more available media. For example, the available medium may include a magnetic medium (for example, a floppy disk, a hard disk, or a magnetic tape), an optical medium (for example, a digital versatile disc (digital versatile disc, DVD)), a semiconductor medium (for example, a solid state disk (solid state disk, SSD)), or the like.

An embodiment of this application provides an electronic device. The electronic device includes a memory and a processor. The memory is configured to store a computer program, and the processor is configured to perform the computer program, to perform the foregoing network channel control method.

An embodiment of this application further provides a computer-readable storage medium. All or some of the methods described in the foregoing embodiments may be implemented by using software, hardware, firmware, or any combination thereof. The computer-readable medium may include a computer storage medium and a communication medium, and may further include any medium that enables a computer program to be transmitted from a place to another place. The storage medium may be any target medium accessible to a computer.

In a possible design, the computer-readable medium may include a compact disc read-only memory (compact disc read-only memory, CD-ROM), a RAM, a ROM, an EEPROM, or another optical disc memory; and the computer-readable medium may include a magnetic disk memory or another magnetic disk storage device. In addition, any connecting line may also be appropriately referred to as a computer-readable medium. For example, if software is transmitted from a website, a server, or another remote source by using a coaxial cable, an optical fiber cable, a twisted pair, a DSL, or wireless technologies (for example, infrared, radio, and microwave), the coaxial cable, the optical fiber cable, the twisted pair, the DSL, or the wireless technologies such as infrared, radio, and microwave are included in the definition of the medium. As used herein, a magnetic disk and an optical disc include a compact disc (CD), a laser disc, an optical disc, a DVD, a floppy disk, and a Blu-ray disc. The magnetic disk usually reproduces data in a magnetic manner, and the optical disc reproduces data optically by using laser.

The embodiments of this application are described with reference to the flowcharts and/or the block diagrams of the method, the device (system), and the computer program product according to the embodiments of this application. It should be understood that computer program instructions may be used to implement each procedure and/or each block in the flowcharts and/or the block diagrams and a combination of a procedure and/or a block in the flowcharts and/or the block diagrams. These computer program instructions may be provided to a general-purpose computer, a dedicated computer, an embedded processor, or a processing unit of another programmable data processing device to generate a machine, so that the instructions executed by the computer or the processing unit of the another programmable data processing device generate an apparatus for implementing a specific function in one or more procedures in the flowcharts and/or in one or more blocks in the block diagrams.

The objectives, technical solutions, and beneficial effects of this application are further described in detail in the foregoing specific implementations. It should be understood that the foregoing descriptions are merely specific implementations of this application, but are not intended to limit the protection scope of this application. Any modification, equivalent replacement, or improvement made based on the technical solutions of this application shall fall within the protection scope of this application.

## Claims

1. A network channel control method, applied to an electronic device, wherein the electronic device has a plurality of network channels, and a target application runs on the electronic device; and the method comprises:
obtaining, by the electronic device, a temperature of the electronic device and an output current of a battery in the electronic device; and
in a running process of the target application, when the temperature is greater than a first temperature threshold and/or the output current is greater than a first current threshold, and there are M available network channels in the plurality of network channels, transmitting, by the electronic device, a data stream of the target application by using target network channels in the M available network channels, wherein
the available network channel is a network channel on which data transmission is being performed and that is in an available state for the target application, the target network channels are N of the M available network channels, M is an integer greater than 1, N is an integer greater than or equal to 1, and N is less than M.

2. The method according to claim 1, before the transmitting, by the electronic device, a data stream of the target application by using target network channels in the M available network channels, further comprising:
obtaining, by the electronic device, network quality information corresponding to the M available network channels, wherein the network quality information is used to represent network quality of the available network channel; and
when a difference between network quality of at least two of the M available network channels is greater than a network quality threshold, network quality of the target network channel is higher than network quality of another available network channel in the M available network channels other than the target network channel; or when a difference between network quality of any two of the M available network channels is less than or equal to the network quality threshold, a priority of the target network channel is higher than a priority of another available network channel in the M available network channels other than the target network channel.

3. The method according to claim 1, wherein the method further comprises:
obtaining, by the electronic device, a target network delay and a composition frame rate of an image; and
selecting, by the electronic device, the corresponding first temperature threshold and the corresponding first current threshold based on the target network delay and the composition frame rate, wherein
when the target network delay is less than a delay threshold and the composition frame rate is greater than a frame rate threshold, the first temperature threshold is a first temperature value, and the first current threshold is a first current value; or when the target network delay is greater than or equal to the delay threshold, and/or the composition frame rate is less than or equal to the frame rate threshold, the first temperature threshold is a second temperature value, and the first current threshold is a second current value; and the first temperature value is less than the second temperature value, and the first current value is less than the second current value.

4. The method according to claim 1, after the transmitting, by the electronic device, a data stream of the target application by using target network channels in the M available network channels, further comprising:
obtaining, by the electronic device, a temperature of the electronic device and an output current of the battery in the electronic device again; and
when the temperature obtained again and the output current obtained again meet a first preset condition, re-determining, by the electronic device, target network channels used to transmit the data stream.

5. The method according to claim 4, wherein the first preset condition comprises: the temperature obtained again is less than a second temperature threshold, and/or the output current obtained again is less than a second current threshold; and the second temperature threshold is less than the first temperature threshold, and the second current threshold is less than the first current threshold; and
the re-determining, by the electronic device, target network channels used to transmit the data stream comprises:
transmitting, by the electronic device, the data stream by using the target network channel and another part or all of the M available network channels other than the target network channel.

6. The method according to claim 4, wherein N is an integer greater than 1, and the first preset condition comprises: the temperature obtained again is greater than a third temperature threshold, and/or the output current obtained again is greater than a third current threshold; and the third temperature threshold is greater than the first temperature threshold, and the third current threshold is greater than the first current threshold; and
the re-determining, by the electronic device, target network channels used to transmit the data stream comprises:
transmitting, by the electronic device, the data stream by using a part of the target network channels, wherein
network quality of a target network channel used to transmit the data stream is higher than network quality of a target network channel not used to transmit the data stream; or a priority of a target network channel used to transmit the data stream is higher than a priority of a target network channel not used to transmit the data stream.

7. The method according to claim 3, after the transmitting, by the electronic device, a data stream of the target application by using target network channels in the M available network channels, further comprising:
obtaining, by the electronic device, a target network delay and a composition frame rate of an image again; and
when the target network delay obtained again meets a second preset condition relative to a target network delay obtained before the target network channel decision is made, and/or the composition frame rate obtained again meets a third preset condition relative to a composition frame rate obtained before the target network channel decision is made, transmitting, by the electronic device, the data stream by using the target network channel and another part or all of the M available network channels other than the target network channel.

8. The method according to claim 7, wherein the second preset condition comprises: a difference between the target network delay obtained again and the target network delay obtained before the target network channel decision is made is greater than a product of a first preset percentage and the target network delay obtained before the target network channel decision is made; and the first preset percentage is greater than 0 and less than 1; and
the third preset condition comprises: a difference between the composition frame rate obtained before the target network channel decision is made and the composition frame rate obtained again is greater than a product of a second preset percentage and the composition frame rate obtained before the target network channel decision is made; and the second preset percentage is greater than 0 and less than 1.

9. The method according to claim 1, wherein the electronic device comprises a temperature sensor, a temperature sensor driver, a coulometer, a coulometer driver, and a network channel decision-making module; and the obtaining, by the electronic device, a temperature of the electronic device and an output current of a battery in the electronic device comprises:
obtaining, by the temperature sensor driver, an actual temperature of a target component collected by the temperature sensor;
determining, by the temperature sensor driver, the temperature of the electronic device based on the actual temperature;
sending, by the temperature sensor driver, the temperature of the electronic device to the network channel decision-making module;
obtaining, by the coulometer driver, the output current of the battery collected by the coulometer; and
sending, by the coulometer driver, the output current to the network channel decision-making module.

10. The method according to claim 2, wherein the electronic device comprises a connectivity service, a network channel control module, and a network channel decision-making module; and the obtaining, by the electronic device, network quality information corresponding to the M available network channels comprises:
sending, by the connectivity service, network status information of each network channel and identification information of a network channel on which data transmission is being performed to the network channel control module, wherein the network status information comprises an enabling status of the network channel and network quality information obtained when the enabling status is an available state, and the enabling status comprises the available state or an unavailable state;
sending, by the network channel control module, the network status information of each network channel and the identification information of the network channel on which data transmission is being performed to the network channel decision-making module;
determining, by the network channel decision-making module from the plurality of network channels based on the enabling status of each network channel and the identification information of the network channel on which data transmission is being performed, an available network channel on which data transmission is being performed and whose enabling status is the available state; and
extracting, by the network channel decision-making module from the network status information of each network channel, network quality information corresponding to the available network channel.

11. The method according to claim 10, wherein the plurality of network channels comprise a cellular channel and a WiFi channel, and the electronic device further comprises a phone manager, a WiFi manager, a cellular network driver, a WiFi network driver, a mobile communication module, and a wireless communication module; and before the sending, by the connectivity service, network status information of each network channel to the network channel control module, the method further comprises:
obtaining, by the cellular network driver, network status information of the cellular channel from the mobile communication module;
sending, by the cellular network driver, the network status information of the cellular channel to the connectivity service by using the phone manager;
obtaining, by the WiFi network driver, network status information of the WiFi channel from the wireless communication module; and
sending, by the WiFi network driver, the network status information of the WiFi channel to the connectivity service by using the WiFi manager.

12. The method according to claim 10, wherein the transmitting, by the electronic device, a data stream of the target application by using target network channels in the M available network channels comprises:
selecting, by the network channel decision-making module, the N available network channels from the M available network channels as the target network channels based on the network quality information corresponding to the M available network channels;
sending, by the network channel decision-making module, a network on/off decision result to the network channel control module, wherein the network on/off decision result is used to indicate to transmit the data stream by using the target network channel instead of transmitting the data stream by using the another available network channel in the M available network channels other than the target network channel;
sending, by the network channel control module, the network on/off decision result to the connectivity service; and
controlling, by the connectivity service based on the network on/off decision result, the target network channels in the M available network channels to transmit the data stream.

13. The method according to claim 12, wherein the electronic device further comprises a phone manager, a WiFi manager, a cellular network driver, a WiFi network driver, a mobile communication module, and a wireless communication module; and the controlling, by the connectivity service based on the network on/off decision result, the target network channels in the M available network channels to transmit the data stream comprises:
when the another available network channel in the M available network channels other than the target network channel comprises a cellular channel, sending, by the connectivity service, a first control instruction to the cellular network driver by using the phone manager; and
controlling, by the cellular network driver according to the first control instruction, the mobile communication module not to transmit the data stream; and/or
when the another available network channel in the M available network channels other than the target network channel comprises a WiFi channel, sending, by the connectivity service, a second control instruction to the WiFi network driver by using the WiFi manager; and
controlling, by the WiFi network driver according to the second control instruction, the wireless communication module not to transmit the data stream.

14. The method according to claim 3, wherein the electronic device comprises an application information receiving module, a graphics library, a graphics interface hook module, an image composer, a frame rate detection module, and a network channel decision-making module; and the obtaining, by the electronic device, a target network delay and a composition frame rate of an image comprises:
sending, by the target application, a first network delay to the application information receiving module;
sending, by the application information receiving module, the first network delay to the network channel decision-making module;
when the target application invokes the graphics library to draw and render an image, obtaining, by the graphics interface hook module, a drawing and rendering instruction from the graphics library;
determining, by the graphics interface hook module, a second network delay according to the drawing and rendering instruction;
sending, by the graphics interface hook module, the second network delay to the network channel decision-making module;
determining, by the network channel decision-making module, the target network delay based on the first network delay and/or the second network delay;
when the image composer composes a drawn and rendered image, obtaining, by the frame rate detection module, composition time at which each frame of image is composed;
calculating, by the frame rate detection module, the composition frame rate based on the composition time at which each frame of image is composed; and
sending, by the frame rate detection module, the composition frame rate to the network channel decision-making module.

15. The method according to claim 14, wherein the selecting, by the electronic device, the corresponding first temperature threshold and the corresponding first current threshold based on the target network delay and the composition frame rate comprises:
selecting, by the network channel decision-making module, the corresponding first temperature threshold and the corresponding first current threshold based on the target network delay and the composition frame rate.

16. The method according to claim 14, wherein the drawing and rendering instruction comprises characteristic parameters corresponding to a plurality of UI controls, and the characteristic parameter comprises a size and a location of the UI control; and the determining, by the graphics interface hook module, a second network delay according to the drawing and rendering instruction comprises:
determining, by the graphics interface hook module from the plurality of UI controls based on the characteristic parameters corresponding to the plurality of UI controls, a target UI control used to represent a network delay;
calculating, by the graphics interface hook module, pixel proportions of various colors comprised in the target UI control; and
determining, by the graphics interface hook module, the second network delay based on a color with a largest pixel proportion.

17. The method according to claim 14, wherein the calculating, by the frame rate detection module, the composition frame rate based on the composition time at which each frame of image is composed comprises:
collecting, by the frame rate detection module, statistics about a quantity of times of obtaining the composition time in a preset period; and
determining, by the frame rate detection module, a ratio of the quantity of times to the preset period as the composition frame rate.

18. The method according to claim 14, wherein the calculating, by the frame rate detection module, the composition frame rate based on the composition time at which each frame of image is composed comprises:
collecting, by the frame rate detection module, statistics about an average time interval between composition time of a plurality of most recent frames of images; and
determining, by the frame rate detection module, a reciprocal of the average time interval as the composition frame rate.

19. The method according to any one of claims 1 to 18, wherein the M available network channels comprise a first network channel and a second network channel, the first network channel is a cellular channel, and the second network channel is a WiFi channel.

20. The method according to any one of claims 1 to 18, wherein the target application is a game application.

21. An electronic device, comprising a memory and a processor, wherein the memory is configured to store a computer program, and the processor is configured to invoke the computer program, to perform the network channel control method according to any one of claims 1 to 20.

22. A computer-readable storage medium, wherein the computer-readable storage medium stores a computer program or instructions, and when the computer program or the instructions are run, the network channel control method according to any one of claims 1 to 20 is implemented.
